# EUROPEAN PATENT APPLICATION

(11) **EP 4 486 025 A1**
(43) Date of publication of application: **01.01.2025**
(21) Application number: 22936578.8
(22) Date of filing: 08.04.2022
(51) Int. Cl.: H04W 64/00, H04W 4/90, H04W 76/50

(54) **SETTING OF POSITION ESTIMATION GUIDELINES CORRESPONDING TO POSITION ESTIMATION TARGET PROVIDED WITH COMMUNICATION FUNCTION**

(71) Applicant: Rakuten Mobile, Inc., Tokyo 158-0094 (JP)
(72) Inventor: AOYAGI, Kenichiro, Tokyo 158-0094 (JP); KITAGAWA, Koichiro, Tokyo 158-0094 (JP); SHETE, Pankaj, Tokyo 158-0094 (JP); MUHAMMAD, Awn, Tokyo 158-0094 (JP)
(74) Representative: Betten & Resch
(86) International application number: PCT/JP2022/017436
(87) International publication number: WO 2023/195181

(57) **Abstract**

A communication control apparatus has at least one processor that performs: by a position estimation target identification unit, identifying a position estimation target equipped with a communication function; by a position estimation policy setting unit, setting a position estimation policy for the identified position estimation target; and by a position estimation unit, estimating a position of the position estimation target in accordance with the set position estimation policy. The position estimation policy setting unit selects and sets the position estimation policy from a plurality of position estimation policies. The position estimation policy specifies estimation basis information to be used in the estimation of position. The estimation basis information includes at least one of: satellite positioning information; non-satellite positioning information; information from radio access network; information from core network; information from NWDAF; information from LMF; and information from activity data collection unit.

## Description

### BACKGROUND OF THE INVENTION

### 1. Field of the Invention

The present disclosure relates to setting of position estimation policy in accordance with position estimation target equipped with communication function.

### 2. Description of the Related Art

The number, types, and applications of wireless communication devices, represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Mobile communication networks for mobile or portable communication devices such as smartphones and cell phones (hereinafter collectively referred to as communication device(s)) are usually constructed by communication cells (hereinafter referred to as terrestrial communication cell(s)) provided by base stations installed on the ground (hereinafter referred to as terrestrial base station(s)). However, in some areas, it was difficult to install a sufficient number of terrestrial base stations for various reasons, resulting in a relatively low quality of mobile communications.

In order to solve the problem of the disparity in mobile communication quality among different regions and the so-called "out-of-range" problem, where mobile communication devices cannot communicate in some regions, non-terrestrial networks (NTN) have been considered. In NTN, communication satellites or unmanned aircrafts flying in outer space or the atmosphere such as the stratosphere, are used as base stations (hereinafter referred to as non-terrestrial base station(s), and especially communication satellites are referred to as satellite base station(s)). The non-terrestrial base station provides a communication cell on the ground (hereinafter referred to as non-terrestrial communication cell(s), and especially communication cells provided by communication satellites are referred to as satellite communication cell(s)). A communication device in a non-terrestrial communication cell communicates with a non-terrestrial base station directly or indirectly via other communication devices. By providing non-terrestrial communication cells in areas where terrestrial communication cells are not sufficient, the quality of mobile communication in such areas can be improved.
Patent Literature 1: JP-A-2010-278886

### SUMMARY OF THE INVENTION

In order to improve the quality of communication services for the vast number of communication devices and other wireless communication equipment connected to mobile communication networks, it is important for the mobile communication networks to be able to recognize the positions and/or locations of these wireless communication equipment. Although various methods for estimating the position of wireless communication equipment have been proposed, there is no effective position estimation method for a wide variety of position estimation targets (wireless communication equipment).

The present disclosure was made in consideration of this situation, and its purpose is to provide a communication control apparatus and the like that can flexibly estimate the positions of various position estimation targets.

In order to solve the above problem, a communication control apparatus in a certain aspect of the present disclosure comprises at least one processor that performs: by a position estimation target identification unit, identifying a position estimation target equipped with a communication function; by a position estimation policy setting unit, setting a position estimation policy for the identified position estimation target; and by a position estimation unit, estimating a position of the position estimation target in accordance with the set position estimation policy.

According to this aspect, the position of the position estimation target can be flexibly estimated according to the position estimation policy set in accordance with the position estimation target.

Another aspect of the present disclosure is a communication control method. The method comprises: identifying a position estimation target equipped with a communication function; setting a position estimation policy for the identified position estimation target; and estimating a position of the position estimation target in accordance with the set position estimation policy.

Further another aspect of the present disclosure is a computer-readable medium. The medium stores a communication control program causing a computer to perform: identifying a position estimation target equipped with a communication function; setting a position estimation policy for the identified position estimation target; and estimating a position of the position estimation target in accordance with the set position estimation policy.

In addition, any combination of the above components, and any conversion of the expression of the present disclosure among methods, devices, systems, recording media, computer programs and the like are also encompassed within this disclosure.

According to the present disclosure, the positions of various position estimation targets can be flexibly estimated.

### BRIEF DESCRIPTION OF THE DRAWINGS

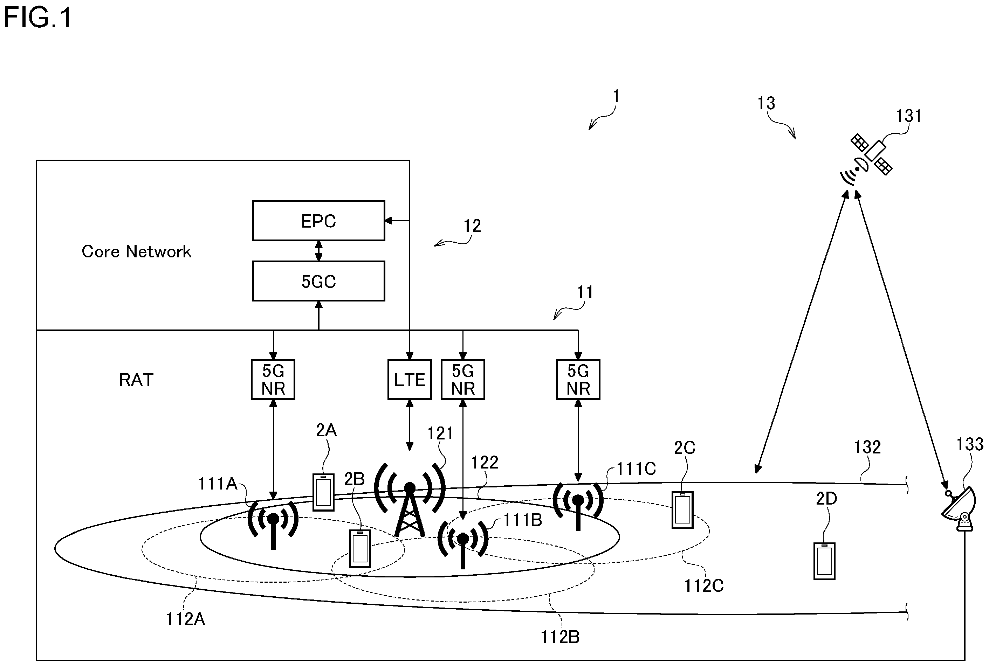

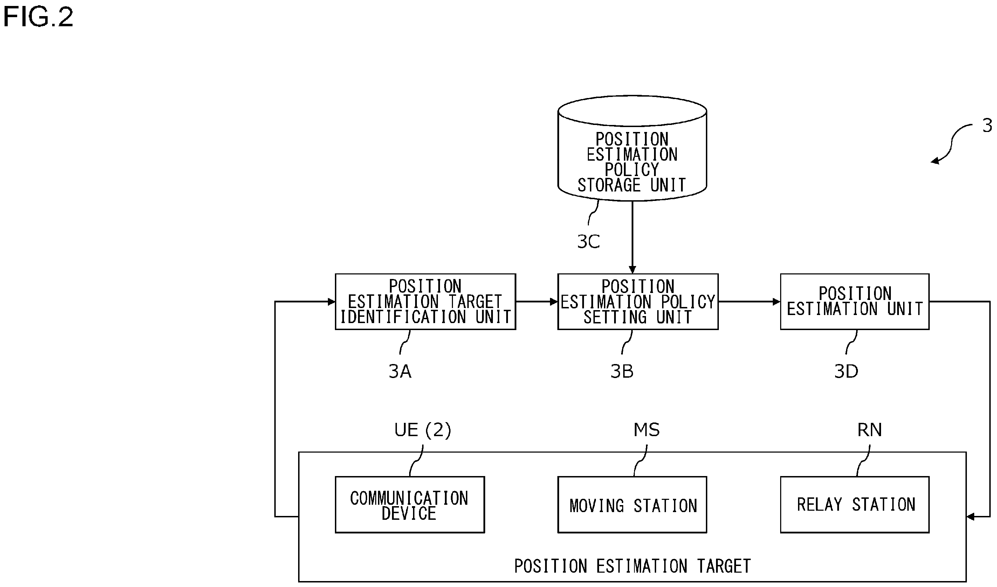

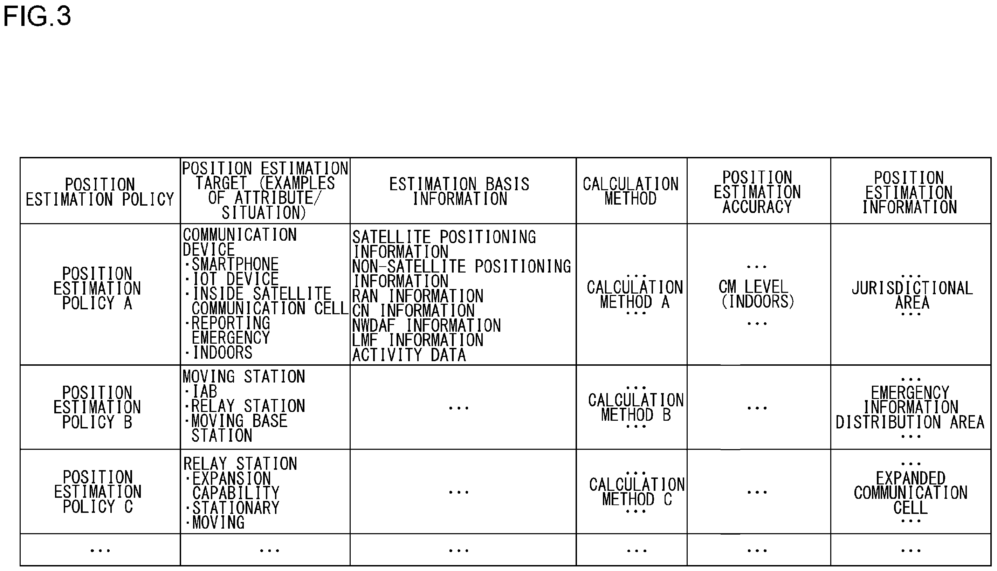

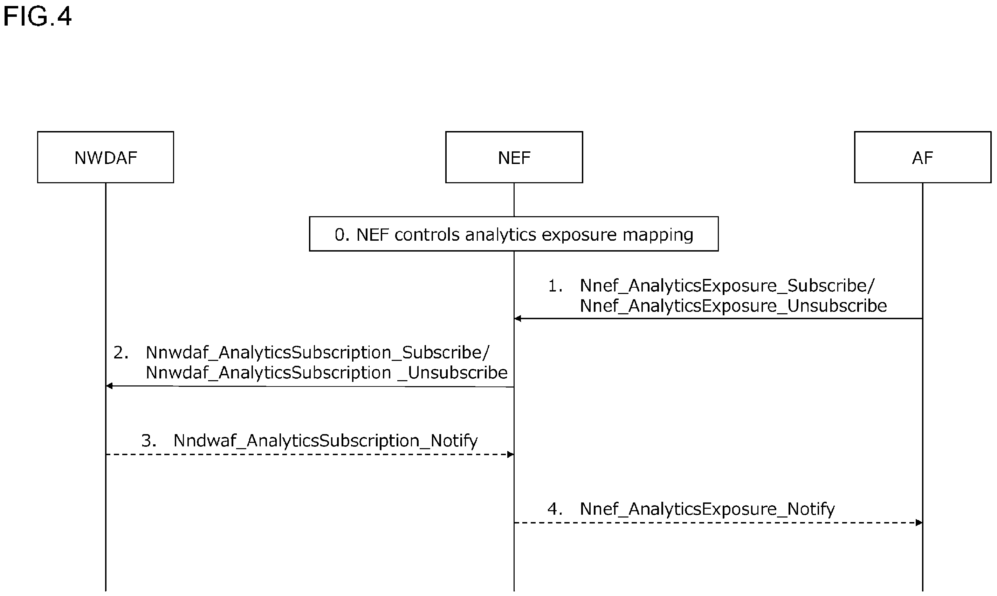

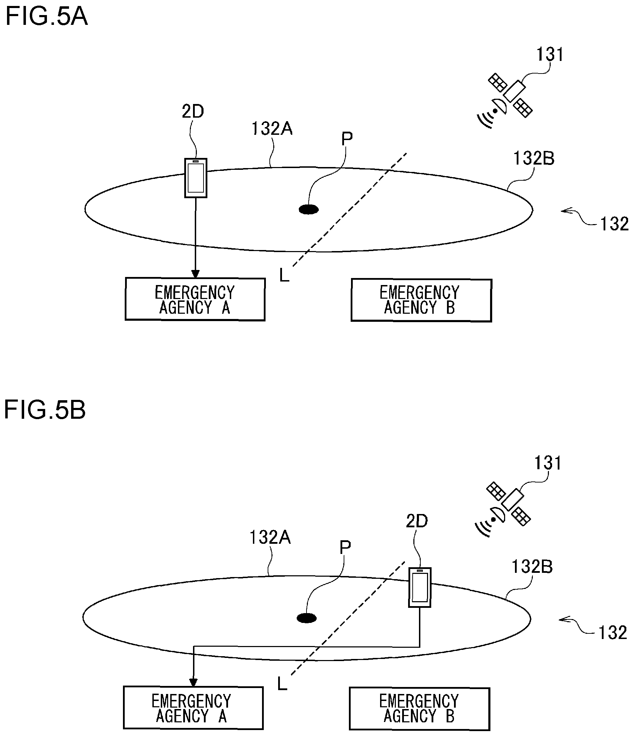

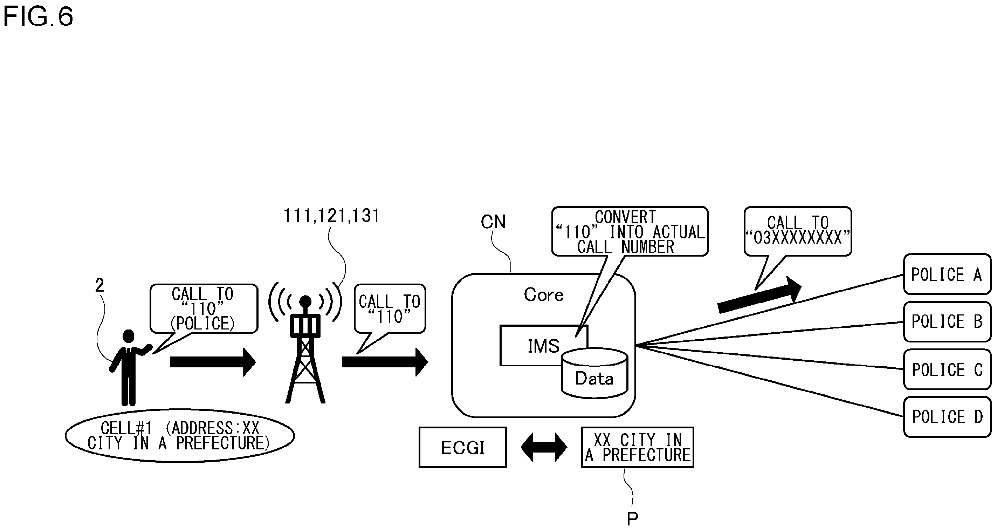

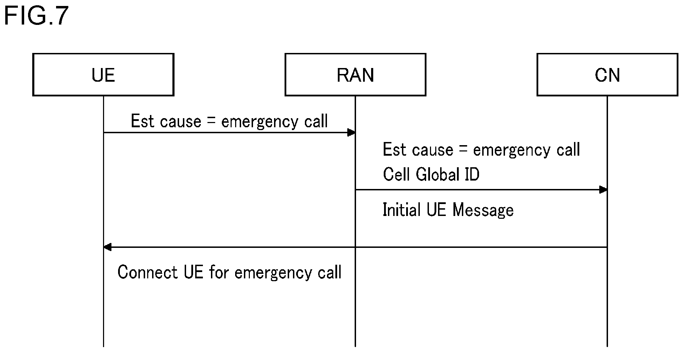

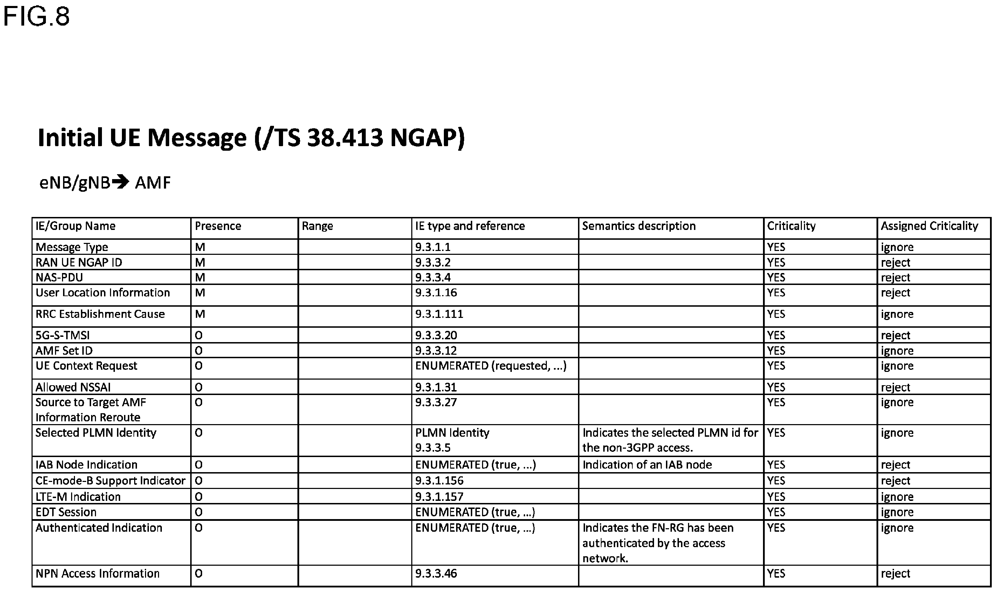

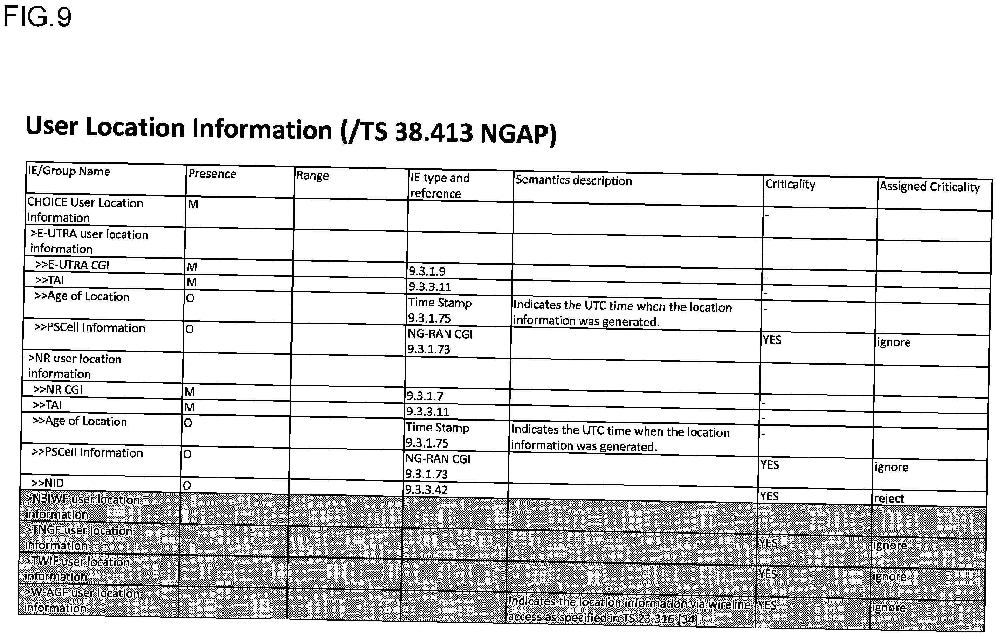

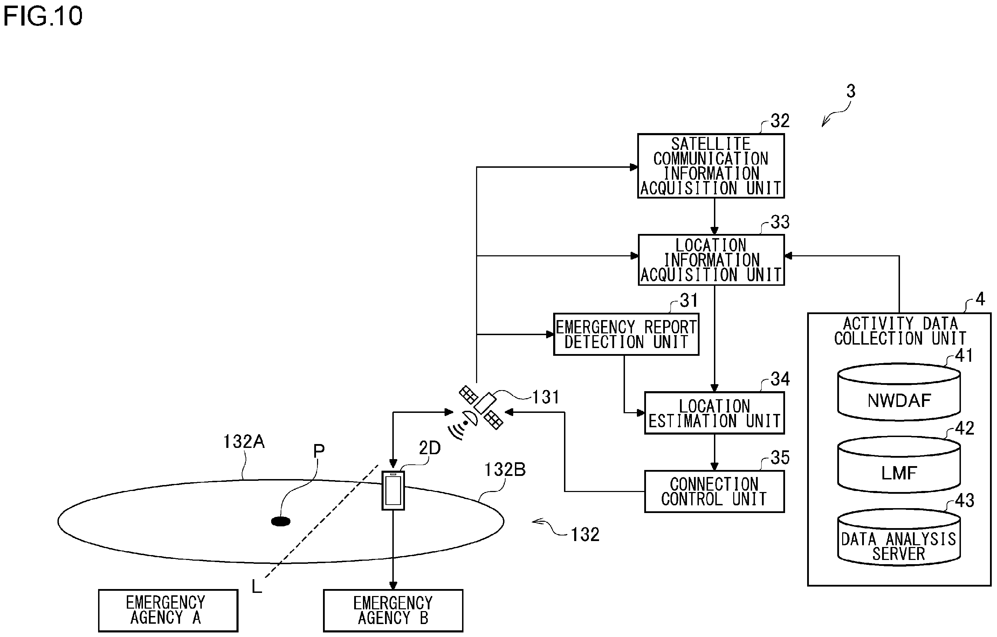

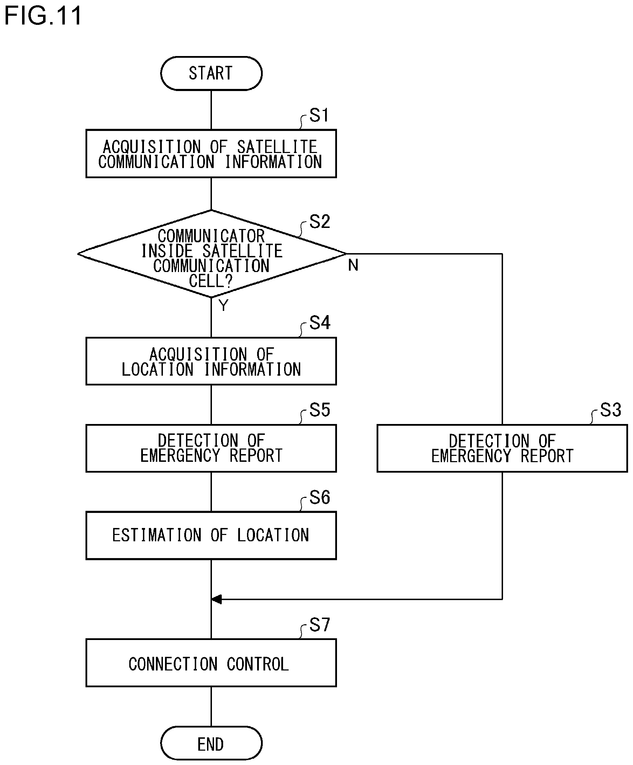

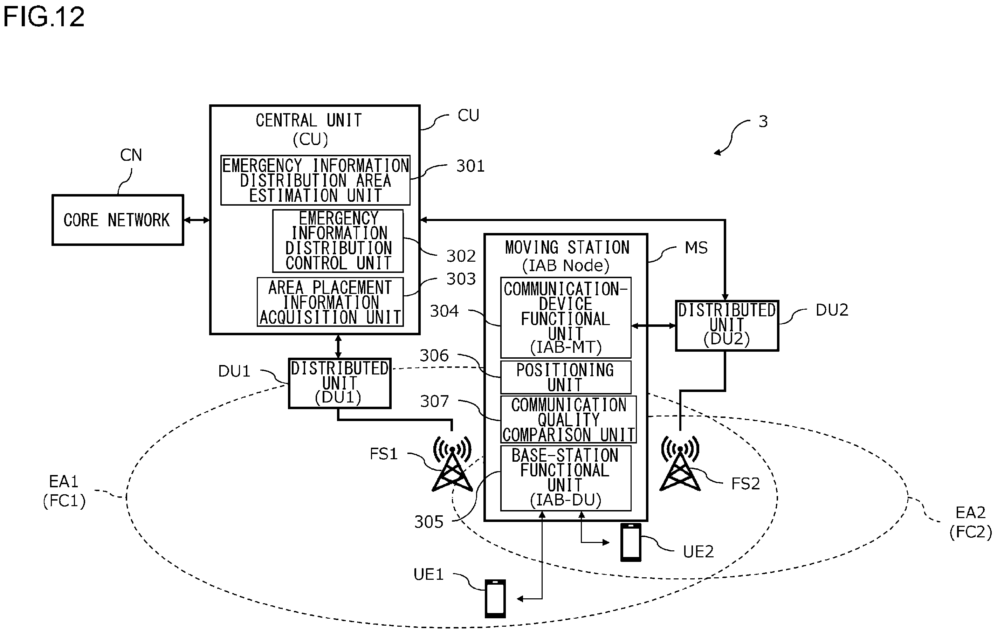

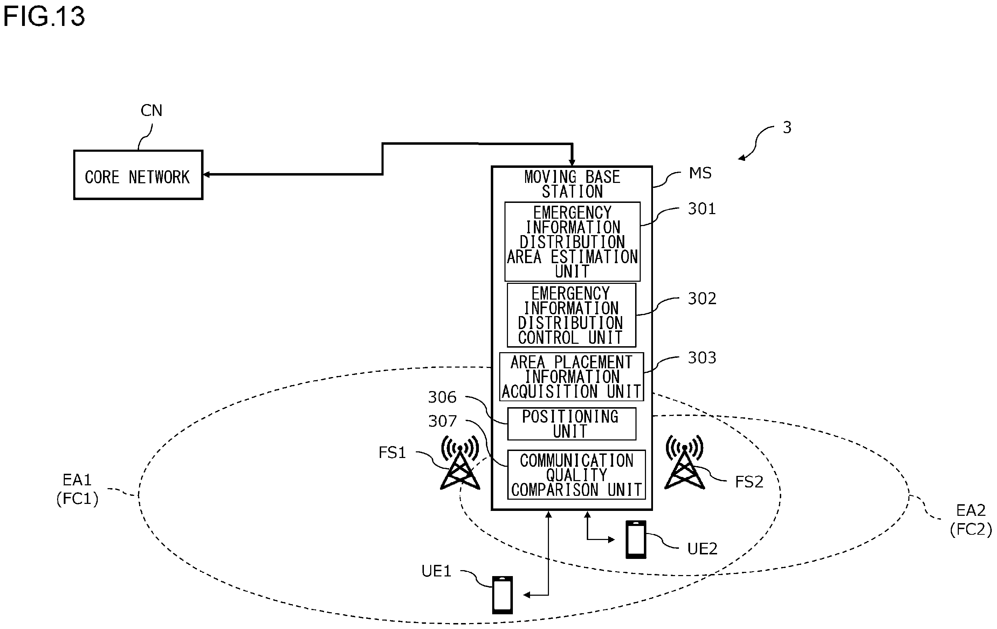

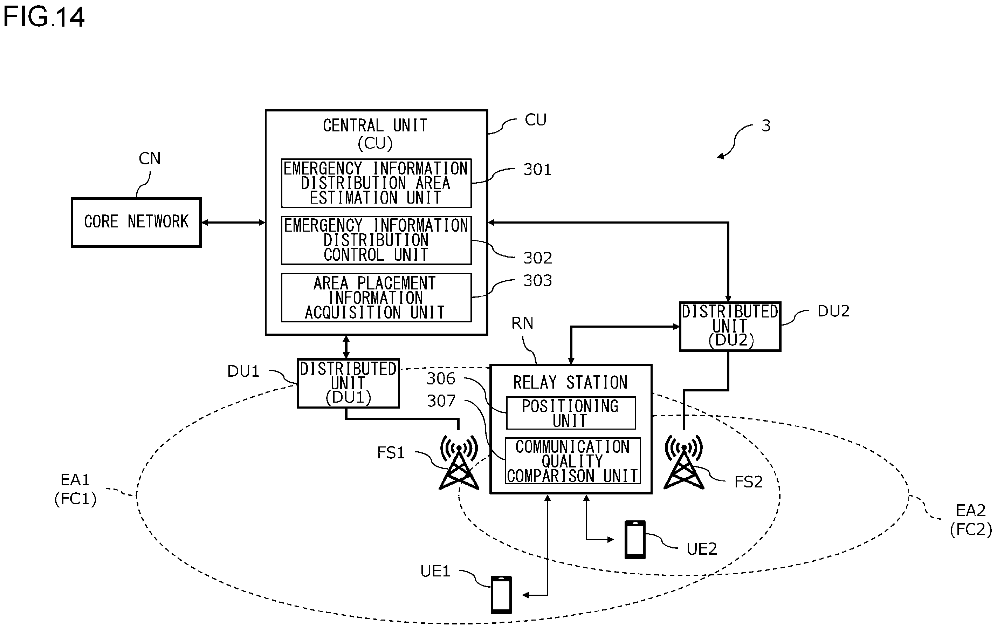

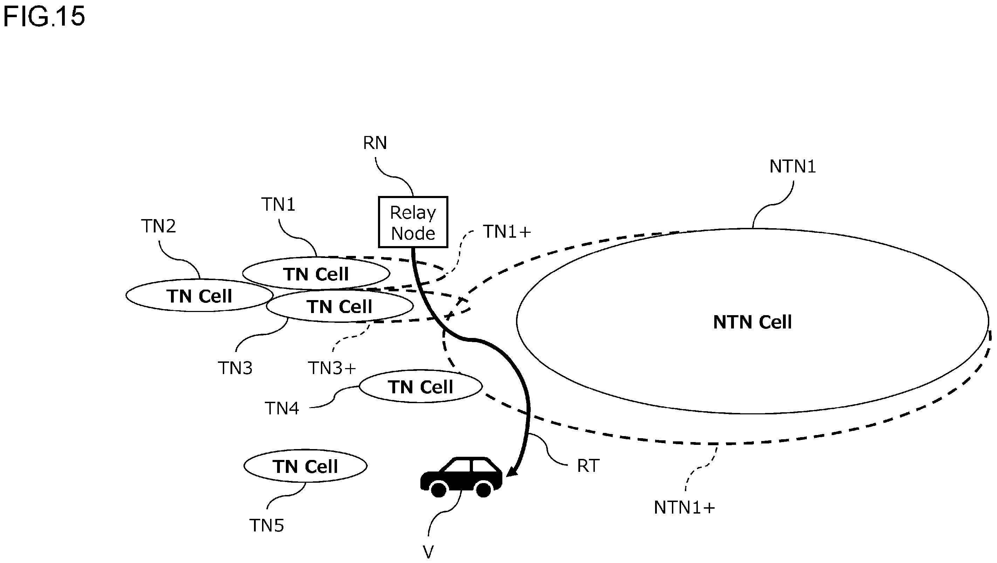

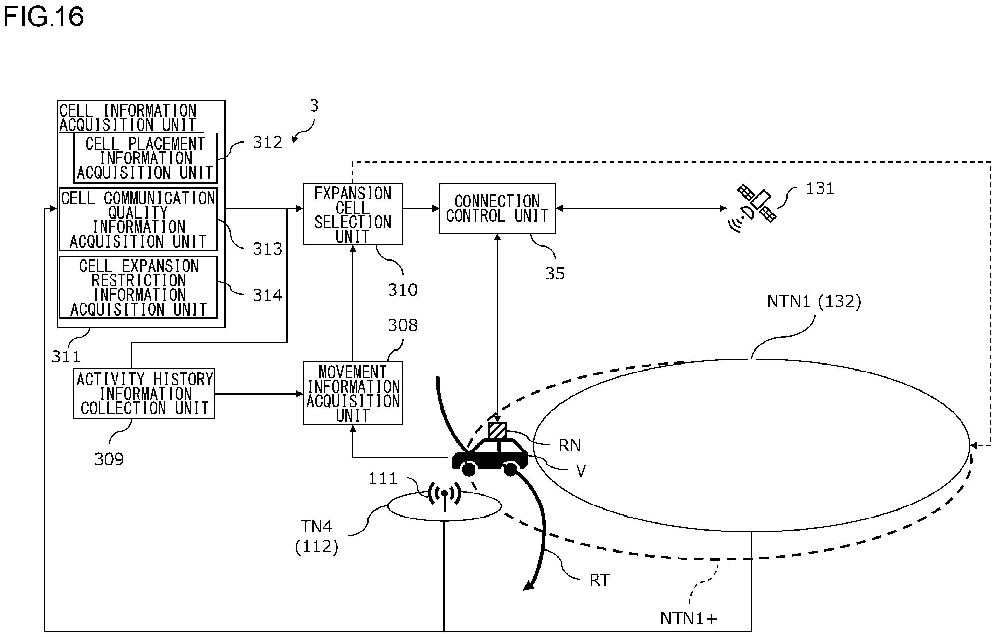

Figure 1 schematically shows the overview of a wireless communication system to which the communication control apparatus is applied. Figure 2 is a functional block diagram of the communication control apparatus. Figure 3 schematically shows an example of position estimation policy. Figure 4 schematically shows an example of the procedure in case each of the functional blocks of the communication control apparatus is realized by the AF, the NEF, the NWDAF etc. Figure 5 shows the first concrete example. Figure 6 shows the first concrete example. Figure 7 shows the first concrete example. Figure 8 shows the first concrete example. Figure 9 shows the first concrete example. Figure 10 shows the first concrete example. Figure 11 shows the first concrete example. Figure 12 shows the second concrete example. Figure 13 shows the second concrete example. Figure 14 shows the second concrete example. Figure 15 shows the third concrete example. Figure 16 shows the third concrete example.

### DETAILED DESCRIPTION OF THE INVENTION

Figure 1 schematically shows an overview of a wireless communication system 1 to which the communication control apparatus according to an embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g. 6G), or any wireless communication networks that are not associated with generations, such as Wi-Fi (registered trademark).

The 5G wireless communication system 11 may include a plurality of 5G base stations 111A, 111B, and 111C (hereinafter collectively referred to as 5G base station 111) installed on the ground capable of communicating by 5G NR with communication devices or communication devices 2A, 2B, 2C, and 2D (hereinafter collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter collectively referred to as 5G cell 112).

The size of the 5G cell 112 of each 5G base station 111 is arbitrary, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For this reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 comprises a plurality of 4G base stations 121 (only one of them is shown in Figure 1) installed on the ground that can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality etc., under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft etc. with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and the 4G base station 121 as terrestrial base stations that constitute the terrestrial network (TN). In this way, the gateway 133 connects the non-terrestrial network (NTN), which is comprising communication satellites 131 as a non-terrestrial base station or a satellite base station, and the terrestrial network TN, which is comprising terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In this way, appropriate coordination is made between different wireless communication systems such as 5G wireless communication system 11, 4G wireless communication system 12, satellite communication system 13 etc. through the gateway 133.

Satellite communication by communication satellites 131 is mainly used for covering areas with no or few terrestrial base stations such as 5G base stations 111 and 4G base stations 121 etc. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D etc. The communication satellite 131 uses beamforming to direct the communication radio wave to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit outer space at a height of about 500 km to 700 km above the ground as a flying non-terrestrial base station. However, a communication satellite flying in geostationary orbit or other higher orbit in outer space, or an unmanned or manned aircraft flying in stratosphere or other lower (e.g. about 20 km above the ground) atmosphere may be used as a non-terrestrial base station in addition to or instead of the communication satellite 131.

Figure 2 is a functional block diagram of the communication control apparatus 3 according to the present embodiment. The communication control apparatus 3 comprises a position estimation target identification unit 3A, a position estimation policy setting unit 3B, a position estimation policy storage unit 3C, and a position estimation unit 3D. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in the present embodiment, some or all of functional blocks of the communication control apparatus 3 may be realized in a centralized manner or a distributed manner by computer and/or processor provided in the communication device UE (2), the moving station MS (including the movable object to which the moving station MS is attached), the relay station RN, the radio access networks (RANs) including the terrestrial base stations 111, 121 and/or the non-terrestrial base station 131, the gateway 133, and the core network CN.

The position estimation target identification unit 3A identifies a position estimation target equipped with a wireless communication function. In the present embodiment, a communication device UE (2), a moving station MS that can communicate with a communication device 2, and a relay station RN that can communicate with base stations 111, 121, 131 and expand the communication cells 112, 122, 132 provided by the base stations 111, 121, 131, will be illustrated as the position estimation targets. The position estimation targets are not limited to these, but can be any wireless communication equipment capable of wireless communication in the wireless communication system 1. While concrete examples are described below, it is preferable for the position estimation target identification unit 3A to identify the type (communication device, moving station, relay station etc.), attribute, situation, state etc. of position estimation target.

The position estimation policy setting unit 3B sets a position estimation policy for the position estimation target identified by the position estimation target identification unit 3A. The position estimation policy setting unit 3B may select and set the position estimation policy of the position estimation target identified by the position estimation target identification unit 3A from a plurality of position estimation policies stored in the position estimation policy storage unit 3C. Alternatively, the position estimation policy setting unit 3B may generate and set the position estimation policy of the position estimation target identified by the position estimation target identification unit 3A by artificial intelligence and/or machine learning.

Figure 3 schematically shows examples of position estimation policies stored in the position estimation policy storage unit 3C (or generated by artificial intelligence and/or machine learning). Each position estimation policy specifies details such as "position estimation target", "estimation basis information", "calculation method", "position estimation accuracy" and "position estimation information".

The "position estimation target" specifies type, attribute, situation, state etc. of the position estimation target. The type of the position estimation target includes, for example, a communication device (UE), a moving station (MS) and a relay station (RN). Examples of the attribute of a communication device include classification such as "smartphone" and "IoT device", identification information, capability, function, authority, contract information etc. Examples of the situation or state of a communication device include "inside satellite communication cell", "reporting emergency", "indoors" and/or connection status, communication status etc. Examples of the attribute of a moving station include classification such as "IAB", "relay station" and "moving base station" as described below, identification information, capability, function, authority etc. Examples of the situation or state of a moving station include movement speed, connection status, communication status etc. Examples of the attribute of a relay station include "expansion capability" (of a communication cell) and/or identification information, capability, function, authority etc. Examples of the situation or state of a relay station include "stationary", "moving" and/or movement speed, connection status, communication status etc.

The position estimation policy setting unit 3B selects from the position estimation policy storage unit 3C a position estimation policy that matches the type, the attribute, the situation, the state etc. of the position estimation target identified by the position estimation target identification unit 3A. For convenience, Figure 3 respectively shows the position estimation policy A comprehensively covering a communication device, the position estimation policy B comprehensively covering a moving station, and the position estimation policy C comprehensively covering a relay station. However, the position estimation policy for each type (communication device, moving station and relay station) may be divided into individual policies in accordance with the attribute, situation, state etc. of the position estimation target. For example, the position estimation policy A in Figure 3 may include a plurality of position estimation policies in accordance with the attribute, situation, state etc. of a communication device, such as one position estimation policy for a communication device "in satellite communication cell" and another position estimation policy for a communication device "indoors".

The "estimation basis information" specifies estimation basis information to be used in the estimation of position of the position estimation target by the position estimation unit 3D. While the details are described below, the estimation basis information includes at least one of the following: a satellite positioning information of the position estimation target; a non-satellite positioning information of the position estimation target; a RAN information that can be acquired from a radio access network; a CN information that can be acquired from a core network; an NWDAF information that can be acquired from the NWDAF (Network Data Analytics Function); an LMF information that can be acquired from the LMF (Location Management Function); and activity data or activity history information that can be acquired from an activity data collection unit or an activity history information collection unit that collects activity data or activity history information of wireless communication equipment.

The "calculation method" specifies the calculation method in the estimation of position by the position estimation unit 3D. Specifically, arbitrary calculation method can be specified, such as a function that can output the "position estimation information" described below that satisfies the "position estimation accuracy" described below, using the specified "estimation basis information" as input. The "position estimation accuracy" specifies the position estimation accuracy by the position estimation unit 3D. While the details are described below, for example, high position estimation accuracy such as at the "cm level" is specified for the estimation of position of an "indoor" communication device.

The "position estimation information" specifies the position estimation information output by the position estimation unit 3D. This position estimation information may be information that directly indicates the estimated position of the position estimation target, or may be information related to the estimated position of the position estimation target. While the details are described below: for a "communication device" of "inside satellite communication cell" and "reporting emergency", the "jurisdictional area" of the emergency agency where the communication device is located is output as the position estimation information; for a "moving station" such as "IAB", "relay station" and "moving base station", the "emergency information distribution area" where the moving station is located is output as the position estimation information; and for a "moving" "relay station", the "expanded communication cell" to be expanded by the relay station is output as the position estimation information.

The position estimation unit 3D estimates a position of the position estimation target identified by the position estimation target identification unit 3A, in accordance with the position estimation policy set by the position estimation policy setting unit 3B, and outputs the "position estimation information" that satisfies the "position estimation accuracy".

Figure 4 schematically shows an example of the procedure in case each of the functional units 3A to 3D of the communication control apparatus 3 is realized by AF (Application Function) outside the 5GC and NEF (Network Exposure Function) and/or NWDAF inside the 5GC. AF is a generic term for external functions realized by applications etc. outside the 5GC. NEF provides an application programming interface (API) to AF for various functions inside the 5GC including NWDAF.

In the example shown in the figure, the AF capable of functioning as the position estimation target identification unit 3A uses "Analytics Exposure", one of the APIs of the NEF, to request the NEF of the position information of the position estimation target (step "1" in the figure). The NEF sends the request for the position information of the position estimation target from the AF to the NWDAF using the interface "Analytics Subscription" (step "2" in the figure). At this time, the NEF may function as the position estimation policy setting unit 3B, and set the position estimation policy for the position estimation target identified in the step "1" in the figure based on the mapping in step "0" in the figure, and send it to the NWDAF in the step "2" in the figure.

The NWDAF can function as the position estimation policy setting unit 3B, the position estimation policy storage unit 3C and the position estimation unit 3D. The NWDAF functioning as the position estimation policy setting unit 3B, sets the position estimation policy for the position estimation target identified in the step "1" and/or the step "2" in the figure (e.g. selects and sets one position estimation policy from the plurality of position estimation policies stored in the position estimation policy storage unit 3C). Besides, the NWDAF functioning as the position estimation unit 3D, estimates the position of the position estimation target in accordance with the position estimation policy set by itself or the NEF. The estimated position information of the position estimation target is provided from the NWDAF to the NEF in step "3" in the figure, and further provided from the NEF to the AF in step "4" in the figure.

In the example in Figure 4, the AF outside the 5GC or the 5G wireless communication system 11 requests the NWDAF via the NEF for the position information of the position estimation target. However, the communication device 2, the 5G radio access network including the 5G base station 111, the 5GC itself etc. which are equipped with 5G communication function, may request the NWDAF and/or the LMF etc. inside the 5GC directly without the NEF for the position information of the position estimation target.

Below, examples of the position estimation processes by the position estimation unit 3D based on some position estimation policies shown in Figure 3 will be described. In the first example, based on "position estimation policy A" for a "communication device" such as "inside satellite communication cell" and "reporting emergency", the "jurisdictional area" of the emergency agency where the communication device is located is output as the position estimation information. In the second example, based on "position estimation policy B" for a "moving station" such as "IAB", "relay station" and "moving base station", the "emergency information distribution area" where the moving station is located is output as the position estimation information. In the third example, based on "position estimation policy C" for a "moving" "relay station", the "expanded communication cell" to be expanded by the relay station is output as the position estimation information. In the fourth example, based on "position estimation policy A" for a "communication device" such as "indoors", the position of the position estimation target is estimated with high position estimation accuracy such as at the "cm level".

Figures 5 to 11 show the first concrete example. The position estimation target in this example is a communication device in a communication cell including jurisdictional areas of different emergency agencies. Figure 5 schematically shows how a communication device 2D in a satellite communication cell 132 in communication with a communication satellite 131 makes an emergency report to an emergency agency such as a police agency or a fire department. An example of an emergency report is a call to the emergency call number of each emergency agency. In Japan, "110" is assigned for emergency reports to police agencies, "119" for emergency reports to fire departments, and "118" for emergency reports to the Japan Coast Guard. The emergency report by eCall, which is an emergency report system for car accidents in Europe, is also an example of emergency report. The communication unit in the car (that corresponds to the communication device 2D shown in the figure) makes an emergency report on the wireless communication system 1 about the occurrence of a car accident and its location. The emergency report by Emergency Services Fallback (ES-FB) and EPS Fallback (Evolved Packet System Fallback) specified in the 5th generation mobile communication system is also an example of emergency report.

In the example shown in the figure, the satellite communication cell 132 contains the jurisdictional areas of different emergency agencies. Specifically, the satellite communication cell 132 is divided by the boundary line L into the jurisdictional area 132A of the emergency agency A and the jurisdictional area 132B of the emergency agency B. There may be overlapping areas among the jurisdictional area 132A and the jurisdictional area 132B. P is a representative point representing the location of the satellite communication cell 132, which belongs to the jurisdictional area 132A in the example shown in the figure. The representative point P may be any point in the satellite communication cell 132, but typically it is a point near the geographical center of the satellite communication cell 132.

The location information of the representative point P of the satellite communication cell 132 can be obtained from the Cell Global Identity (CGI) of the satellite communication cell 132, which is stored in 5GC, EPC, and other core networks for satellite communication. The CGI is the identifier or the ID uniquely assigned to each communication cell in mobile communication network or wireless communication system 1 supporting satellite communication. The CGI consists of four parts: MCC (Mobile Country Code), MNC (Mobile Network Code), LAC (Location Area Code), and CI (Cell Identification).

MCC and MNC constitute PLMN (Public Land Mobile Network), which is an identifier of each wireless communication network provided by each operator in each country/region, and PLMN and LAC constitute LAI (Location Area Identity), which is an identifier of the geographic location of each wireless communication network. In the example of Figure 5, the geographical location of the representative point P of the satellite communication cell 132 can be recognized by looking up its LAI stored in the core network, and thus it can be recognized that the representative point P belongs to the jurisdictional area 132A of the emergency agency A. Various technologies developed based on CGI such as CGI+TA, E-UTRAN CGI (ECGI), E-CGI, U-TDOA, ATI, A-GPS etc. may be used in place of or in addition to CGI.

Figures 5A and 5B show how the emergency report made in the satellite communication cell 132 by the communication device 2D in communication with communication satellite 131 is connected according to the representative point P detected by the core network based on the CGI. In Figure 5A, the communication device 2D is in the jurisdictional area 132A of the emergency agency A, and in Figure 5B, the communication device 2D is in the jurisdictional area 132B of emergency agency B. In both cases, the core network detects the emergency report from the communication device 2D, and detects the geographic location of the representative point P based on the CGI of the satellite communication cell 132, and connects the emergency report to the emergency agency A whose jurisdictional area 132A contains the representative point P. In Figure 5A, where the communication device 2D is in the jurisdictional area 132A, the emergency report is connected to the correct emergency agency A. In Figure 5A. However, in Figure 5B, where communication device 2D is in jurisdiction area 132B, the emergency report is not connected to the correct emergency agency B, but to the wrong emergency agency A.

Figure 6 schematically shows the process of connecting an emergency report based on ECGI. The user of the communication device 2 is in the communication cell "Cell#1" with "xx city in A prefecture" as the representative point P, and makes an emergency call (emergency report) to the emergency call number "110" assigned to the police agency in Japan. The 5GC, EPC or other core network CN for satellite communication receives the emergency report via the terrestrial base station 111, 121 or satellite base station 131, and in its IMS (IP Multimedia Subsystem) converts the emergency call number "110" into the actual call number of the police command center etc., which is the emergency agency in charge of this emergency report. In this case, the core network CN refers to the ECGI of the communication cell (terrestrial communication cell 112, 122 or satellite communication cell 132 provided by the terrestrial base station 111, 121 or satellite base station 131) that originated the emergency report (specifically, the core network CN obtains the ECGI from the base station according to a predefined procedure or process such as "PCC based NPLI retrieval"), and recognizes the location "xx city in A prefecture" of the representative point P. As the result, the call number "110" for emergency report is converted into the actual call number "03xxxxxxxx" of "Police A" whose jurisdictional area contains "xx city in A prefecture". In this way, the emergency report to the emergency call number "110" from the communication device 2 in the communication cell "Cell#1" is connected to "Police A", the emergency agency in charge.

Figure 7 shows the flow of the connection process for an emergency call based on CGI. First, the UE (User Equipment), which is a communication device such as a smartphone, notifies the RAN (Radio Access Network) of the occurrence of an emergency call. The RAN is a radio access network composed of terrestrial base stations 111, 121 or satellite base stations 131. When the RAN receives an emergency call and notifies the core network CN of the emergency call, it provides the CGI of the terrestrial communication cell 112, 122 or satellite communication cell 132 that originated the emergency call to the core network CN, according to the predefined procedure such as "PCC based NPLI retrieval". The RAN that receives the emergency call also sends the Initial UE Message from the UE to the core network CN.

Figure 8 shows a specific example of the initial message from the UE. The initial message from the UE is sent to the AMF (Access and Mobility Management Function) included in the core network CN, from the eNB (121), which is the 4G base station connected to the UE, the gNB (111), which is the 5G base station connected to the UE, communication satellite 131, which is a satellite base station connected to the UE. Figure 9 shows a specific example of the user location information included in the initial message from the UE in Figure 8. Since this user location information includes CGI information such as "E-UTRA CGI" and "NR CGI", the core network CN that receives this information can recognize the location of the representative point P of the terrestrial communication cells 112, 122 or satellite communication cell 132 that originated the emergency call. Then, the core network CN connects the emergency call from the UE to the emergency agency whose jurisdictional area contains the representative point P.

In Figures 6 to 9, as in Figure 5B, since the UE (communication device 2D in Figure 5B) is in the jurisdictional area of another emergency agency (emergency agency B in Figure 5B) whose jurisdictional area does not include the representative point P, the emergency call is not connected to the correct emergency agency (B), but is connected to the wrong emergency agency (A) whose jurisdictional area includes the representative point P.

Figure 10 is a functional block diagram of the communication control apparatus 3 that can solve the problems of Figures 5 to 9. The communication control apparatus 3 has an emergency report detection unit 31, a satellite communication information acquisition unit 32, a location information acquisition unit 33, a location estimation unit 34 and a connection control unit 35. The location information acquisition unit 33 and/or the location estimation unit 34 correspond to the position estimation unit 3D in Figure 2. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Specifically, some or all of each of the above functional blocks may be realized by hardware resources and/or software in 5GC, EPC or other core network CN for satellite communications.

In the example of Figure 10, as in Figure 5B, the communication device 2D is in the satellite communication cell 132 provided by the communication satellite 131 as a satellite base station. As in Figure 5B, the representative point P of the satellite communication cell 132 is included in the jurisdictional area 132A of the emergency agency A, and the communication device 2D is within the jurisdictional area 132B of the emergency agency B. 32B. The emergency report detection unit 31 is able to detect an emergency report from the communication device 2D within the satellite communication cell 132 including the jurisdictional areas 132A and 132B of different emergency agencies A and B via communication satellite 131. An example of an emergency report is an emergency call to the emergency call number of the emergency agency as described in Figure 6. The satellite communication cell 132 may include jurisdictional areas of three or more different emergency agencies. Not only the satellite communication cell 132 provided by the communication satellite 131 as a satellite base station, but also 5G cell 112 or 4G cell 122 as the terrestrial communication cell provided by 5G base station 111 or 4G base station 121 as terrestrial base station can contain the jurisdictional areas of different emergency agencies. The present embodiment can be applied to such cases, in the same way as described below for satellite communication cell 132.

The satellite communication information acquisition unit 32 acquires information indicating that the communication device 2D is in the satellite communication cell 132. Specifically, the satellite communication information acquisition unit 32 acquires information about communications, not limited to emergency reports, performed by the communication device 2D from the communication satellite 131, it can detect that the communication device 2D is in the satellite communication cell 132. Alternatively, the core network CN, in which the satellite communication information acquisition unit 32 is implemented, can recognize communication cell in communication or ready for communication with the communication device 2D, and thus can detect that the communication device 2D is in satellite communication cell 132 as in Figure 10. In addition, when the satellite communication information acquisition unit 32 is able to acquire satellite positioning information from the GPS module etc. implemented in the communication device 2D via communication satellite 131 etc., it can be determined whether the geographical location of the communication device 2D is in the satellite communication cell 132.

The location information acquisition unit 33 acquires location information suggesting the location of the communication device 2D in the satellite communication cell 132. In the example of Figure 10, the location information indicating whether the communication device 2D in the satellite communication cell 132 is in the jurisdictional area 132A of the emergency agency A or in the jurisdictional area 132B of the emergency agency B is acquired by the location information acquisition unit 33.

The location information acquisition unit 33 obtains, for example, the location information suggesting the location of the communication device 2D in the satellite communication cell 132, from the activity data collection unit 4, which collects activity data of one or more communication devices 2. The activity data collection unit 4 is a concept or functional unit that encompasses various databases, data analysis engines, artificial intelligence with machine learning capabilities, and servers of service providers that provide various services using these elements. For example, as shown in the figure, NWDAF (Network Data Analytics Function) 41, LMF (Location Management Function) 42, and other data analysis servers 43 are included in the activity data collection unit 4. It is preferable that the communication devices 2D itself in Figure 10 is included in the one or more communication devices 2 for which the activity data collection unit 4 collects activity data. However, as described below, it is also possible to obtain an indication of the location of the communication device 2D only from the activity data of communication devices 2 other than the communication device 2D.

The NWDAF 41 is a function introduced in the 5GC, the core network of 5G, and is responsible for collecting and analyzing data on the network including 5G network. Specifically, NWDAF 41 collects and accumulates activity data on various activities performed on the network by a number of communication devices 2 connected to the network, and utilizes the analysis results for traffic control on the network, for example. The LMF 42 is a function introduced in the 5GC, the core network of 5G, and manages the physical location of each communication device 2 on the network including 5G network. In other wireless communication systems, including those of later generations than 5G, functions similar to NWDAF 41 and/or LMF 42 might be provided under different names. In the present embodiment, such similar functions may be used instead of or in addition to NWDAF 41 and/or LMF 42.

The other data analysis server 43 is, for example, a server used by service providers that provide map services and/or location tracking services for a large number of communication devices 2 connected to a network. In these services, location data of a large number of communication devices 2 connected to the network is collected and stored from GPS modules etc., and based on the analysis of the data, data on congestion level for each time period in each area, for example, is generated and utilized for service quality improvement etc.

Among the components included in the activity data collection unit 4 described above, from NWDAF 41 and the data analysis server 43, the location information acquisition unit 33 can acquire statistical data on the activities on the network or historical data on the physical locations of mainly an unspecified number of communication devices 2. In the example of Figure 10, the congestion level, communication traffic, and other data for each time period in the jurisdictional area 132A of the emergency agency A and the jurisdictional area 132B of the emergency agency B, respectively, in the satellite communication cell 132, are acquired by the location information acquisition unit 33 from the NWDAF 41 and the data analysis server 43 as the location information suggesting the location of the communication device 2D in the satellite communication cell 132. For example, during the time period when the emergency report detection unit 31 detects an emergency report from the communication device 2D, if the location information from the NWDAF 41 and the data analysis server 43 suggests that the number and/or communication volume of the communication devices 2 in the jurisdictional area 132B are higher on average than the number and/or communication volume of the communication devices 2 in the jurisdictional area 132A, it can be presumed that the communication device 2D that originated the emergency report is likely to be in the jurisdictional area 132B.

In the case where the historical data of the location of the communication device 2D that originated the emergency report can be obtained, in addition to or instead of the location information of an unspecified number of communication devices 2 obtained from the NWDAF 41 and the data analysis server 43, it is possible to accurately estimate the location of the communication device 2D in the satellite communication cell 132. For example, during the time period when the emergency report detection unit 31 detects an emergency report from the communication device 2D, if the location information from the NWDAF 41 and the data analysis server 43 suggests that the communication device 2D was more frequently in the jurisdictional area 132B than in the jurisdictional area 132A in the past, it can be presumed that the communication device 2D that originated the emergency report is highly likely to be in the jurisdictional area 132B. In addition to or instead of the historical data of the location on past days, the historical data of the location of the communication device 2D immediately before (e.g. within one hour) the communication device 2D originated the emergency report may be used. For example, if the location information from the NWDAF 41 and the data analysis server 43 suggests that the communication device 2D was in the jurisdictional area 132B within 30 minutes before the emergency report, it can be presumed that the communication device 2D that originated the emergency report is highly likely to remain in the jurisdictional area 132B.

In contrast to NWDAF 41 and data analysis server 43, which collect location information of an unspecified number of communication devices 2, the LMF 42 can collect location information of a specific communication device 2D such as statistical data on its activities on the network or historical data on its physical location. For example, during the time period when the emergency report detection unit 31 detects an emergency report from the communication device 2D, if the location information from the LMF 42 suggests that the communication device 2D was more frequently in the jurisdictional area 132B than in the jurisdictional area 132A in the past, it can be presumed that the communication device 2D that originated the emergency report is highly likely to be in the jurisdictional area 132B. If the location information from the LMF 42 suggests that the communication device 2D was in the jurisdictional area 132B within 30 minutes before the emergency report, it can be presumed that the communication device 2D that originated the emergency report is highly likely to remain in the jurisdictional area 132B.

The historical data of the location of a specific communication device 2D as described above can be obtained from the GPS module or memory implemented in the communication device 2D via a communication satellite 131 by the location information acquisition unit 33 directly. However, if the location information is acquired from the communication device 2D after the emergency report detection unit 31 detects the emergency report from the communication device 2D, the response to the emergency situation will be delayed. Therefore, it is preferable that the location information acquisition unit 33 obtains the location information from the communication device 2D in advance, before the emergency report detection section 31 detects an emergency report from the communication device 2D. Similarly, the acquisition of location information from the activity data collection unit 4 by the location information acquisition unit 33 should be done in advance before the emergency report detection unit 31 detects an emergency report from the communication unit 2D.

On the other hand, the location information to be acquired by the location information acquisition unit 33 is necessary when one communication cell includes the jurisdictional areas of different emergency agencies, as in the example in Figure 10, and is not necessary when one communication cell includes only one jurisdictional area of one emergency agency. Therefore, in the embodiment of Figure 10, only when the information indicating that the communication device 2D is in the satellite communication cell 132 is acquired by the satellite communication information acquisition unit 32, the location information acquisition unit 33 acquires the location information from the activity data collection unit 4 and/or the communication device 2D. This is because, as mentioned above, many satellite communication cells 132 have a diameter of more than 20 km and are likely to include the jurisdictional areas of several different emergency agencies.

Alternatively, if the core network CN is able to recognize in advance that an individual satellite communication cell 132 actually contains the jurisdictional areas of several different emergency agencies, the location information acquisition unit 33 may acquire location information only for the communication device 2D in such a satellite communication cell 132, while the location information acquisition unit 33 may not acquire location information for communication devices outside such a satellite communication cell 132. Similarly, for terrestrial communication via the terrestrial base stations 111 and 121, the location information acquisition unit 33 may acquire location information only for communication device 2 in terrestrial communication cell 112, 122 which contains the jurisdictional areas of several different emergency agencies, while the location information acquisition unit 33 may not acquire location information for communication devices outside such a terrestrial communication cell 132, 122.

The location estimation unit 34 estimates the location of the communication device 2D for which the emergency report detection section 31 has detected an emergency report within the satellite communication cell 132, whether it is in the jurisdictional area 132A of the emergency agency A or the jurisdictional area 132B of the emergency agency B, based on the location information of the communication device 2D that the location information acquisition unit 33 preferably acquired in advance before the emergency report. While the specific example of the estimation is described above, in the example of Figure 10, it is estimated that the communication device 2D is in the jurisdictional area 132B of the emergency agency B. The connection control unit 35 connects the communication device 2D to the emergency agency B in whose jurisdictional area 132B the communication device 2D is estimated to be located.

According to the communication control apparatus 3 described above, the problems that occur in Figure 5B and Figures 6 to 9 can be solved. In Figure 5B, the emergency report from the communication device 2D in the jurisdictional area 132B of the emergency agency B is connected to the wrong emergency agency A instead of being connected to the correct emergency agency B. However, the communication control apparatus 3 in Figure 10 estimates the location of the communication device 2D (whether it is in the jurisdictional area 132A of the emergency agency A or the jurisdictional area 132B of the emergency agency B) based on the location information that suggests the location of the communication device 2D in the satellite communication cell 132, and can connect the emergency report from a communication device 2D to the appropriate emergency agency B.

Figure 11 is a flowchart showing an example of the processes of the communication control apparatus 3 in Figure 10. In the flowchart, "S" means step or process. In S1, the satellite communication information acquisition unit 32 acquires information indicating that the communication device 2D is in the satellite communication cell 132. In S2, the satellite communication information acquisition unit 32 determines whether or not the communication device 2D is in the satellite communication cell 132. If the communication device 2D is not in the satellite communication cell 132 (No in S2), that is, if the communication device 2D is in the terrestrial communication cell 112, 122, when the emergency report detection unit 31 detects an emergency report from the communication device 2D in S3, the connection control unit 35 connects the communication device 2D to the emergency agency that has jurisdiction over the terrestrial communication cells 112, 122 in S7. As explained in Figure 6, the connection control unit 35 selects the emergency agency whose jurisdictional area covers the terrestrial communication cell 112, 122, based on the location of the representative point P that can be recognized from the CGI information of the terrestrial communication cell 112, 122.

If the communication device 2D is in the satellite communication cell 132 in S2 (Yes), in S4 the location information acquisition unit 33 obtains the location information suggesting the location of the communication device 2D in the satellite communication cell 132 from the activity data collection unit 4 and/or the communication device 2D. When the emergency report detection unit 31 detects an emergency report from the communication device 2D in S5, in S6 the location estimation unit 34 estimates the location of the communication device 2D (either jurisdictional area of the emergency agency) based on the location information of the communication device 2D acquired in S4. In S7, the connection control unit 35 connects the communication device 2D to the emergency agency in whose jurisdictional area the communication device 2D is estimated to be located.

Figures 12 to 14 show the second concrete example. The position estimation target in this example is a moving station such as an IAB, a relay station and a moving base station. As shown in Figure 1, the wireless communication system 1 is usually constructed by the terrestrial communication cells 112, 122 (hereinafter referred to as fixed communication cells FC) provided by terrestrial base stations 111, 121 stationarily installed on the ground (hereinafter referred to as fixed base stations FS). However, mobile communication cannot be performed outside fixed communication cells FC, and the quality of mobile communications might be low depending on time and/or place even within fixed communication cells FC. Although the wireless communication system 1 can also include the satellite communication system 13 that uses the communication satellite 131 as a non-terrestrial base station or moving base station, it is impractical to supplement the terrestrial network of terrestrial base stations 111, 121 solely by the communication satellites 131.

To solve these problems, as schematically shown in Figure 12, moving stations MS are preferably introduced to supplement the fixed communication cells FC provided by the fixed base stations FS. Examples of moving stations MS include a moving base station such as the communication satellite 131 that itself functions as a base station and something like a repeater that communicates with an existing fixed base station FS to expand an existing fixed communication cell FC (hereinafter referred to as a relay station). The moving station MS in the example in Figure 12 is an IAB (Integrated Access and Backhaul) node.

IAB is a technology specified in 5G to expand a communication cell of a parent node, utilizing wireless backhaul between a base station that serves as an IAB donor (parent node) and an IAB node (child node) and/or between parent and child IAB nodes (where an IAB node closer to the IAB donor is the parent node, and an IAB node far from the IAB donor is the child node). Here, "expansion of a communication cell" includes not only expanding the area covered by an existing communication cell, but also improving the communication quality of at least part of an existing communication cell. Furthermore, "expansion of the area covered by a communication cell" includes not only expanding the area in the horizontal plane of an existing communication cell, but also expanding an existing communication cell vertically, e.g. underground or to the upper and/or lower floors of a building.

In Figure 12, the moving station MS as the IAB node comprises a communication-device functional unit 304 that functions as a communication device for the parent node including fixed base station FS and a base-station functional unit 305 that functions as a base station for a communication device UE with which the moving station MS can communicate. In 5G, the communication-device functional unit 304 is specified as a MT (Mobile Termination) or IAB-MT, and the base-station functional unit 305 is specified as a DU (Distributed Unit) or IAB-DU. It should be noted that, in other wireless communication systems including generations after 5G, functions similar to IAB, MT, DU, CU (Central Unit described below) may be provided under different names, but such similar functions may be used as IAB, MT, DU, CU in the present embodiment.

Two fixed base stations FS1 and FS2 are illustrated in Figure 12. The first fixed base station FS1 provides the first fixed communication cell FC1 and the second fixed base station FS2 provides the second fixed communication cell FC2. In the example in Figure 12, the baseband function of each fixed base station FS1 and FS2 is divided into a central unit (CU) on the core network CN side and a distributed unit (DU) on the communication device UE side. The first distributed unit DU1 of the first fixed base station FS1 is provided near the radio equipment such as an antenna of the first fixed base station FS1, typically in the same base station facility as the radio equipment. The second distributed unit DU2 of the second fixed base station FS2 is provided near the radio equipment such as an antenna of the second fixed base station FS2, typically in the same base station facility as the radio equipment. Although the central unit CU in the example shown in the figure is shared by the first fixed base station FS1 (the first distributed unit DU1) and the second fixed base station FS2 (the second distributed unit DU2), separate central units may be provided for each of the fixed base stations FS1 and FS2. The central unit CU is connected to the core network CN. The connection between the radio equipment such as an antenna in each of the fixed base stations FS1, FS2 and each of the distributed units DU1, DU2, the connection between each of the distributed units DU1, DU2 and the central unit CU, and the connection between the central unit CU and the core network CN, are typically wired by conductors and/or optical fibers etc., although some or all of those connections may be wireless.

The communication-device functional unit 304 (IAB-MT) of the moving station MS, depending on the position of the moving station MS, can connect wirelessly with the distributed unit DU of either fixed base station FS. In the example in Figure 12, the communication-device functional unit 304 is connected wirelessly to the second distributed unit DU2 of the second fixed base station FS2. In this case, the moving station MS functions as a child node for the second fixed base station FS2 as a parent node or an IAB donor, and expands the second fixed communication cell FC2 by the second fixed base station FS2 as a parent node. Then, the base-station functional unit 305 (IAB-DU) of the moving station MS provides a moving communication cell as expanded communication cell of the second fixed communication cell FC2 to the communication device UE. In the example in Figure 12, two communication devices UE1 and UE2 connected to the base-station functional unit 305 of the moving station are shown schematically. The first communication device UE1 being inside the first fixed communication cell FC1 and outside the second fixed communication cell FC2, substantially communicates with the second fixed base station FS2 via the moving station MS.

The moving station MS is attached to a movable object, except when it can move (or fly) autonomously like the communications satellite 131. A movable object is any movable thing or person and includes, for example, automobiles, trains, motorcycles, bicycles, airplanes, ships, and any other vehicles. The moving station MS may be a communication device 2 used by a moving person, for example, a communication device 2 equipped with a tethering function and/or personal hotspot function. Since such a communication device 2 (moving station MS) usually functions as a wireless LAN access point, the RAT (e.g. 5G NR) used by the base station to be expanded (e.g. the second fixed base station FS2) and the RAT used by the expanding moving station MS may be different.

The inventor recognized the issue that moving stations MS can move between different emergency information distribution areas (EA1, EA2 described below), while fixed base stations FS1, FS2, which are stationarily installed on the ground, statically belong to specific emergency information distribution areas. As described below, in conventional wireless communication standards represented by 5G, emergency information distribution cannot be appropriately performed by such moving stations MS.

An emergency information distribution area is an area where emergency information concerning earthquake, tsunami and other disasters etc. is distributed simultaneously or broadcasted. A system that distributes emergency information is called a public warning system (PWS), and also an earthquake and tsunami warning system (ETWS) especially if it distributes warnings about disasters such as earthquakes and tsunamis. Emergency information distribution areas are generally set up in units of administrative divisions such as cities, wards, towns and villages. Each fixed base station FS1, FS2 stationarily installed on the ground belongs to the emergency information distribution area set up in the administrative division of the place where it is installed. In the example in Figure 12, the first fixed base station FS1 installed in the first administrative division belongs to the first emergency information distribution area EA1 set up in the first administrative division, and the second fixed base station FS2 installed in the second administrative division belongs to the second emergency information distribution area EA2 set up in the second administrative division.

The emergency information distribution system simultaneously distributes emergency information to all communication devices UE in the emergency information distribution area where disasters or other emergencies have occurred. Specifically, when a disaster etc. occurs in the first emergency information distribution area EA1, the first fixed base station FS1 belonging to the first emergency information distribution area EA1 simultaneously distributes emergency information to all communication devices UE in the first fixed communication cell FC1. Similarly, when a disaster etc. occurs in the second emergency information distribution area EA2, the second fixed base station FS2 belonging to the second emergency information distribution area EA2 simultaneously distributes emergency information to all communication devices UE in the second fixed communication cell FC2.

As such, the fixed base stations FS1, FS2 fixedly installed on the ground are fixedly associated with the specific emergency information distribution areas EA1, EA2, can appropriately perform emergency information distribution in each of the emergency information distribution areas EA1, EA2. On the other hand, the moving station MS can move among different emergency information distribution areas EA1 and EA2. Therefore, it is necessary to appropriately switch the emergency information distribution areas EA1 and EA2 for distributing emergency information depending on the location and/or the situation of the moving station MS. Thus, the main purpose of this embodiment is to provide a communication control apparatus 3 that can properly perform emergency information distribution by the moving station MS.

The communication control apparatus 3 comprises an emergency information distribution area estimation unit 301, an emergency information distribution control unit 302, an area placement information acquisition unit 303, a communication-device functional unit 304, a base-station functional unit 305, a positioning unit 306, and a communication quality comparison unit 307. The emergency information distribution area estimation unit 301 corresponds to the position estimation unit 3D in Figure 2. Some of these functional blocks can be omitted as long as the communication control apparatus 3 realizes at least some of the operations and/or effects described below. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in this embodiment, some or all of functional blocks of the communication control apparatus 3 may be realized in a centralized or distributed manner by computer and/or processor provided in the communication device UE, the moving station MS (including the movable object), the distributed unit DU1, DU2, the central unit CU, and the core network CN. In the example in Figure 12, the functional blocks 301-303 are provided in the central unit CU and the functional blocks 304-307 are provided in the moving station MS, but the locations where these functional blocks are provided are arbitrary, as long as the communication control apparatus 3 realizes at least some of the operations and/or effects described below.

The emergency information distribution area estimation unit 301 provided in the central unit CU estimates an emergency information distribution area where the moving station MS is located. The emergency information distribution control unit 302 provided in the central unit CU has the moving station MS distribute emergency information for the emergency information distribution area estimated by the emergency information distribution area estimation unit 301. If the emergency information distribution area estimation unit 301 estimates that the moving station MS is located in the first emergency information distribution area EA1, the emergency information distribution control unit 302 has the moving station MS distribute emergency information for the first emergency information distribution area EA1. If the emergency information distribution area estimation unit 301 estimates that the moving station MS is located in the second emergency information distribution area EA2, the emergency information distribution control unit 302 has the moving station MS distribute emergency information for the second emergency information distribution area EA2.

The method by which the emergency information distribution area estimation unit 301 estimates the emergency information distribution area in which the moving station MS is located is arbitrary, but some specific examples are shown below.

In the first example, the emergency information distribution area estimation unit 301 estimates that the moving station MS is located in the emergency information distribution area EA to which the fixed base station FS to which the moving station MS is connected belongs. In the example shown in Figure 12, as mentioned above, the communication-device functional unit 304 of the moving station MS is connected to the second distributed unit DU2 of the second fixed base station FS2. The fact that the moving station MS has been connected to the second fixed base station FS2 is notified from the communication-device functional unit 304 and/or the second distributed unit DU2 to the central unit CU and/or the core network CN, when the communication-device functional unit 304 (IAB-MT) is connected to the second distributed unit DU2, or when the communication-device functional unit 304 (IAB-MT) is handed over from another distributed unit (e.g. the first distributed unit DU1) to the second distributed unit DU2. This notification may include the cell identification information such as CGI (Cell Global Identity) of the second fixed communication cell FC2 to which the moving station MS is connected, and/or information of the tracking area (also called location registration area) to which the second fixed communication cell FC2 belongs. Thus, the emergency information distribution area estimation unit 301 provided in the central unit CU and/or the core network CN (hereinafter collectively referred to as the core network CN side), can recognize the fixed base station FS and/or the fixed communication cell FC to which the moving station MS is connected.

In the example in Figure 12, the emergency information distribution area estimation unit 301 estimates that the moving station MS is located in the second emergency information distribution area EA2 to which the second fixed base station FS2 to which the moving station MS is connected belongs. Then, the emergency information distribution control unit 302 has the base-station functional unit 305 of the moving station MS distribute emergency information for the second emergency information distribution area EA2. The emergency information distributed by the base-station functional unit 305 of the moving station MS is generated by the core network CN and/or the central unit CU, and distributed to the second distributed unit DU2 of the second fixed base station FS2. The emergency information is then distributed from the second distributed unit DU2 to the communication-device functional unit 304 of the moving station MS, and distributed to the communication device UE by the base-station functional unit 305 of the moving station MS. In this way, the moving station MS redistributes the emergency information obtained from the fixed base station FS by the communication-device functional unit 304 through the base-station functional unit 305.

In the second example, the emergency information distribution area estimation unit 301 estimates the emergency information distribution area EA where the moving station MS is located, based on the placement information of the emergency information distribution area EA acquired by the area placement information acquisition unit 303, and the position of the moving station MS measured by the positioning unit 306. The area placement information acquisition unit 303 acquires placement information, such as the coverage area and/or boundaries of each emergency information distribution area EA, from the core network CN side. The positioning unit 306 measures the position (acquires satellite positioning information) of the moving station MS based on, for example, a satellite positioning system such as GPS (Global Positioning System) and GNSS (Global Navigation Satellite System). The positioning unit 306 may be mounted on the moving station MS, on the movable object to which the moving station MS is attached, or on a communication device 2 or other devices carried by a person boarding the moving station MS. Furthermore, the positioning unit 306 may estimate or measure the position of the moving station MS, utilizing information collection and/or information analysis functions such as an NWDAF (Network Data Analytics Function) and/or an LMF (Location Management Function) of the core network CN, and/or various information that can be referenced in the application layer. By comparing the placement information of the emergency information distribution area EA obtained by the area placement information acquisition unit 303 and the position of the moving station MS measured by the positioning unit 306, the emergency information distribution area estimation unit 301 can estimate the emergency information distribution area EA in which the moving station MS is located.

In this example, it is assumed that the emergency information distribution area estimation unit 301 estimates that the moving station MS is located in the first emergency information distribution area EA1. Then, the emergency information distribution control unit 302 has the base-station functional unit 305 of the moving station MS distribute emergency information for the first emergency information distribution area EA1. At this time, as mentioned above, since the communication-device functional unit 304 of the moving station MS is connected to the second distributed unit DU2 of the second fixed base station FS2, the emergency information for the first emergency information distribution area EA1 generated on the core network CN side is distributed from the fixed base station (FS2) belonging to the different emergency information distribution area (EA2) to the moving station MS. In this way, the second fixed base station FS2 forwards the emergency information for the first emergency information distribution area EA1 to the moving station MS. However, since the second fixed base station FS2 itself belongs to the second emergency information distribution area EA2 different from the first emergency information distribution area EA1, it does not distribute this emergency information to communication devices UE. It should be noted that the first fixed base station FS1 belonging to the first emergency information distribution area EA1 distributes the emergency information to communication devices UE in the same manner as moving station MS. As described above, according to this example, the emergency information distribution control unit 302 can have the moving station MS distribute the emergency information acquired from the fixed station (FS2) to which the moving station MS is connected, for the emergency information distribution area (EA1) different from the emergency information distribution area (EA2) to which the fixed station (FS2) belongs.

In the third example, the emergency information distribution area estimation unit 301 estimates that the moving station MS is located in the emergency information distribution area EA to which the fixed base station FS with the highest communication quality for the moving station MS among the plurality of fixed base stations FS belongs. The communication quality of the plurality of fixed base stations FS around the moving station MS is measured and compared by the communication quality comparison unit 307 provided in the moving station MS and/or the movable object. Here, it is assumed that the communication quality comparison unit 307 determines that the communication quality for the moving station MS is the highest by the second fixed base stations FS2 among the shown two fixed base stations FS1 and FS2, and the emergency information distribution area estimation unit 301 estimates that the moving station MS is located in the second emergency information distribution area EA2 to which the second fixed base station FS2 belongs. Then, the emergency information distribution control unit 302 has the base-station functional unit 305 of the moving station MS distribute emergency information for the second emergency information distribution area EA2. The emergency information distributed by the base-station functional unit 305 of the moving station MS is generated on the core network CN side, and distributed to the second distributed unit DU2 of the second fixed base station FS2. The emergency information is then distributed from the second distributed unit DU2 to the communication-device functional unit 304 of the moving station MS, and distributed to the communication device UE by the base-station functional unit 305 of the moving station MS. In this way, the moving station MS redistributes the emergency information obtained from the fixed base station FS by the communication-device functional unit 304 through the base-station functional unit 305.

It should be noted that, when the emergency information distribution area estimation unit 301 estimates that the moving station MS is located in the second emergency information distribution area EA2 to which the second fixed base station FS2 belongs, the communication-device functional unit 304 of the moving station MS may be connected to the first distributed unit DU1 of the first fixed base station FS1. In this case, the emergency information for the second emergency information distribution area EA2 generated on the core network CN side is distributed from the fixed base station (FS1) belonging to the different emergency information distribution area (EA1) to the moving station MS. In this way, the first fixed base station FS1 forwards the emergency information for the second emergency information distribution area EA2 to the moving station MS. However, since the first fixed base station FS1 itself belongs to the first emergency information distribution area EA1 different from the second emergency information distribution area EA2, it does not distribute this emergency information to communication devices UE. It should be noted that the second fixed base station FS2 belonging to the second emergency information distribution area EA2 distributes the emergency information to communication devices UE in the same manner as moving station MS. As described above, according to this example, the emergency information distribution control unit 302 can have the moving station MS distribute the emergency information acquired from the fixed station (FS1) to which the moving station MS is connected, for the emergency information distribution area (EA2) different from the emergency information distribution area (EA1) to which the fixed station (FS1) belongs.

Figure 13 schematically shows an example utilizing a moving base station, such as the communication satellite 131 and an aircraft that itself functions as a base station, as a moving station MS. The moving base station MS is not limited to a flying non-terrestrial base station such as the communication satellite 131 and an aircraft, but may be a base station mounted on automobiles, trains, motorcycles, bicycles ships, and any other vehicles that can move on the ground surface. It should be noted that the position of the moving base station MS that can be measured by the positioning unit 306 means, for a ground moving base station that can move on the ground surface, the actual position of the ground moving base station on the ground surface, and for a non-terrestrial base station that can fly above the ground, the position of the representative point (typically the center) of the non-terrestrial communication cell (such as satellite communication cell 132) provided on the ground by the non-terrestrial base station.

The moving base station MS, which can communicate directly with the core network CN and the communication device UE, can be equipped with all the functional blocks of the communication control apparatus 3. Note that the communication-device functional unit 304 (IAB-MT) and the base-station functional unit 305 (IAB-DU), which were provided in Figure 12 to make the moving station MS function as an IAB node, are not necessary for the moving base station MS in Figure 13.

The emergency information distribution area estimation unit 301 may estimate the emergency information distribution area EA where the moving base station MS is located, based on the placement information of the emergency information distribution area EA acquired by the area placement information acquisition unit 303, and the position of the moving base station MS measured by the positioning unit 306 (satellite positioning information and/or non-satellite positioning information). Besides, the emergency information distribution area estimation unit 301 may estimate that the moving base station MS is located in the emergency information distribution area EA to which the fixed base station FS with the highest communication quality measured by the communication quality comparison unit 307 among the plurality of fixed base stations FS belongs. The emergency information distribution control unit 302 has the moving base station MS distribute emergency information (generated by the core network CN and/or the moving base station MS) for the emergency information distribution area EA estimated by the emergency information distribution area estimation unit 301.

Figure 14 schematically shows an example utilizing a relay station RN such as a repeater that relays communication signal between the existing fixed base station FS and a communication device UE and expands the existing fixed communication cell FC, as a moving station MS. Note that the communication-device functional unit 304 (IAB-MT) and the base-station functional unit 305 (IAB-DU), which were provided in Figure 12 to make the moving station MS function as an IAB node, are not provided in the relay station RN in Figure 14. The relay station RN to which the function of the distributed unit (IAB-DU) is not provided, is difficult to be controlled individually and meticulously for the distribution of emergency information etc. from the core network CN side (the core network CN and/or the central unit CU) as in the example of Figure 12. For this reason, only the emergency information for the second emergency information distribution area EA2 to which the second fixed base station FS2 to which the relay station RN is connected belongs, is distributed to the relay station RN typically. In other words, unlike the example in Figure 12, the emergency information for the first emergency information distribution area EA1 to which the first fixed base station FS1, different from the second fixed base station FS2 to which the relay station RN is connected, belongs is not distributed to the relay station RN.

However, the emergency information distribution control unit 302 may determine whether or not to allow the relay station RN, which has received the emergency information for the second emergency information distribution area EA2 from the second fixed base station FS2, to redistribute this emergency information, according to the estimation result of the emergency information distribution area estimation unit 301. For example, if the emergency information distribution area estimation unit 301 estimates that the relay station RN is located in the first emergency information distribution area EA1, the emergency information distribution control unit 302 does not allow the relay station RN, which has received the emergency information for the second emergency information distribution area EA2 from the second fixed base station FS2, to redistribute this emergency information. It should be noted that some or all of the functional blocks such as the emergency information distribution area estimation unit 301, the emergency information distribution control unit 302, the area placement information acquisition unit 303 to control the emergency information distribution by the relay station RN, may be provided in the fixed base station (FS2) and/or the distributed unit (DU2) to which the relay station RN is connected, or in the relay station RN itself.

Figures 15 and 16 show the third concrete example. The position estimation target in this example is a moving relay station. As shown in Figure 1, the wireless communication system 1 according to the present embodiment includes the terrestrial network (TN) 11, 12, capable of communicating with communication device 2 in the terrestrial communication cell 112, 122 provided on the ground by terrestrial base station 111, 121 installed on the ground, and the non-terrestrial network (NTN) 13, capable of communicating with communication device 2 in the non-terrestrial communication cell 132 provided on the ground by flying non-terrestrial base station 131. The communication control apparatus according to the present embodiment controls a movable relay station that expands any terrestrial communication cells and/or non-terrestrial communication cells in a wireless communication system 1 where the TN and the NTN coexist.

Figure 15 shows a schematic overview of relay station control according to the present embodiment. In this example, a relay station RN (Relay Node or Relay Station) is installed to an automobile or a vehicle V as a movable object. Other examples of movable objects include trains, motorcycles, bicycles, airplanes, ships, and any other vehicles, as well as moving people and/or objects, and the relay station RN may be attached to these movable objects. These moving objects may move along predetermined or arbitrary movement routes. In the example in Figure 15, a vehicle V with a relay station RN attached moves on the ground along an arbitrary movement route RT. On the ground, there are five terrestrial communication cells 112 and 122 provided by terrestrial base stations 111 and 121 (shown in Figure 15 as "TN Cell TN1" through "TN Cell TN5"), and one non-terrestrial communication cell 132 provided by non-terrestrial base station 131 (shown in Figure 15 as "NTN Cell NTN1").

The relay station RN can communicate with the terrestrial base stations 111, 121 and/or the non-terrestrial base station 131, and expand the terrestrial communication cells 112, 122 and/or the non-terrestrial communication cell 132 provided by the base stations. Here, "expansion of a communication cell" includes not only expanding the area covered by an existing communication cell, but also improving the communication quality of at least part of an existing communication cell. Furthermore, "expansion of the area covered by a communication cell" includes not only expanding the area in the horizontal plane of an existing communication cell, but also expanding an existing communication cell vertically, e.g. underground or to the upper and/or lower floors of a building. There is also a known technology called IAB (Integrated Access and Backhaul), which uses backhaul between base stations to cause one base station to function as a relay station to another base station. The one base station in this case may be used as a relay station RN according to the present embodiment. The relay station RN may be a communication device 2 that can function as a relay station, for example, a communication device 2 equipped with a so-called tethering function and/or personal hotspot function. When such a communication device 2, which usually functions as a wireless LAN access point, is used as a relay station RN, the RAT (e.g. 5G NR) used by the expanded base station (e.g. 5G base station 111) and the RAT used by the expanding relay station RN are different.

When a vehicle V to which a relay station RN is attached moves on the ground where many communication cells (TN1 to TN5, NTN1 etc.) exist, it is necessary to properly select one or more communication cells to be expanded by the moving relay station RN. In the example in Figure 15, a relay station RN moving along the movement route RT with a vehicle V, initially selects the first terrestrial communication cell TN1 as the expanded cell to provide the first terrestrial expansion cell TN1+, then selects the third terrestrial communication cell TN3 as the expanded cell to provide the third terrestrial expansion cell TN3+, and finally selects the first non-terrestrial communication cell NTN1 as the expanded cell to provide the first non-terrestrial expansion cell NTN1+.

A communication device 2 inside the first terrestrial expansion cell TN1+ (outside the first terrestrial communication cell TN1) can communicate indirectly via the relay station RN with the terrestrial base station 111 or 121 that provides the first terrestrial communication cell TN1. A communication device 2 inside the third terrestrial expansion cell TN3+ (outside the third terrestrial communication cell TN3) can communicate indirectly via the relay station RN with the terrestrial base station 111 or 121 that provides the third terrestrial communication cell TN3. A communication device 2 inside the first non-terrestrial expansion cell NTN1+ (outside the first non-terrestrial communication cell NTN1) can communicate indirectly via the relay station RN with the non-terrestrial base station 131 that provides the first non-terrestrial communication cell NTN1.

In the example in Figure 15, the second terrestrial communication cell TN2 and the fifth terrestrial communication cell TN5, which are far from the movement route RT of the vehicle V to which the relay station RN is attached, are not selected as target cells for expansion by the relay station RN. In addition, although the fourth terrestrial communication cell TN4 is in close proximity to the movement route RT, it is not selected as target cell for expansion by the relay station RN, because the first non-terrestrial communication cell NTN1 is preferentially selected as target cell for expansion by the relay station RN, which can provide the broader communication coverage (NTN1+) than that (potentially TN4+) expanded from the fourth terrestrial communication cell TN4.

As described above, the communication cell that should be expanded by the moving relay station RN attached to the vehicle V is selected according to the movement information of the vehicle V such as the movement route RT and/or the cell information such as the placement of multiple communication cells relative to the movement route RT.

Figure 16 is a functional block diagram of the communication control apparatus 3 of the present embodiment. The communication control apparatus 3 comprises a movement information acquisition unit 308, an activity history information collection unit 309, an expansion cell selection unit 310, a cell information acquisition unit 311, and a connection control unit 35. The movement information acquisition unit 308, the activity history information collection unit 309, the expansion cell selection unit 310 etc. correspond to the position estimation unit 3D in Figure 2. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in this embodiment, some or all of functional blocks of the communication control apparatus 3 may be realized in a distributed or centralized manner by computer and/or processor provided in the relay station RN, the vehicle V, the communication device 2, the terrestrial base stations 111, 121, the non-terrestrial base station 131, the gateway 133, and the core network CN (all of these are shown as separate entities in Figure 16 for convenience).

The movement information acquisition unit 308 acquires movement information concerning the movement of the relay station RN installed to the vehicle V. The movement information includes at least one of the following: the movement route RT of the vehicle V and/or the relay station RN, the arrival time of the vehicle V and/or the relay station RN at each location on the movement route RT, the traffic condition on the movement route RT, the movement speed of the vehicle V and/or the relay station RN, the movement direction of the vehicle V and/or the relay station RN, and the current position of the vehicle V and/or the relay station RN. Some or all of this movement information can be acquired from the vehicle V and/or the relay station RN itself, the communication device 2 used by a person traveling in the vehicle V, a movement instruction device (not shown) that remotely gives movement instruction to the vehicle V etc. For example, the movement route RT, the arrival time at each location on the movement route RT, and the traffic condition on the movement route RT can be obtained from map applications and/or navigation applications installed in the vehicle V, the relay station RN, the communication device 2, the movement instruction device etc. In addition, the movement speed, the movement direction, and the current position can be obtained from a positioning module such as a GPS module installed in the vehicle V, the relay station RN, the communication device 2 etc. (satellite positioning information).

The movement information acquisition unit 308 may estimate some or all of the movement information of the relay station RN installed to the vehicle V based on the activity history information collected by the activity history information collection unit 309. The activity history information collection unit 309 collects activity history information of at least one of: one or more identified or unidentified communication devices 2 that can communicate directly without the relay station RN and/or indirectly via the relay station RN with the terrestrial base station 111, 121 and/or the non-terrestrial base station 131; the relay station RN and/or the vehicle V whose movement information is estimated; and other relay stations RN and/or vehicles V. The activity history information collected by the activity history information collection unit 309 is also used by the expansion cell selection unit 310 described below.

For example, the NWDAF (Network Data Analytics Function) and/or the LMF (Location Management Function) introduced in the 5GC as the core network CN of 5G can be used as the activity history information collection unit 309. The NWDAF is responsible for collecting and analyzing data on the network including 5G network. Specifically, the NWDAF collects and accumulates activity history information (including history information on the base station to which the communication device 2, the relay station RN, and/or the vehicle V were connected and the location of the communication device 2, the relay station RN, and/or the vehicle V) on various activities performed on the network by a number of communication devices 2, the relay stations RN, and/or the vehicles V connected to the network, and utilizes the analysis results for traffic control on the network, for example. The LMF manages the physical location of a number of communication devices 2, the relay stations RN, and/or the vehicles V on the network including 5G network. In other wireless communication systems, including those of later generations than 5G, functions similar to the NWDAF and/or the LMF might be provided under different names. Such similar functions may be used in this embodiment in place of or in addition to the NWDAF and/or the LMF.

Servers used by service providers that provide map services, navigation services, location tracking services etc. for a large number of communication devices 2, the relay stations RN, and/or the vehicles V connected to the network, can also be used as the activity history information collection unit 309. In these servers, the activity history information related to the various activities performed in connection with the services provided to the many communication devices 2, the relay stations RN, and/or the vehicles V connected to the network (including history information on the location of the communication device 2, the relay station RN, and/or the vehicle V) can also be collected.

From the NWDAF, the LMF, and/or the servers of service providers as the activity history information collection unit 309, statistical information about the activities on the network of an unspecified number of the communication devices 2, the relay stations RN, and/or the vehicles V connected to the network (including statistical information about the base stations to which they were connected) and/or historical information about their physical locations can be obtained. In the example in Figure 16, the movement information acquisition unit 308 and/or the expansion cell selection unit 310 obtains activity history information such as congestion and communication traffic during each time period, in the area between the fourth terrestrial communication cell TN4 and the first non-terrestrial communication cell NTN1 where the vehicle V is traveling through at the current time and/or in the where the vehicle V traveling on the movement route RT will arrive or travel through at a future time.

Based on the activity history information (including congestion information and/or traffic information on the network and/or physically) of these unspecified number of communication devices 2, relay stations RN, and/or vehicles V during each time period, the movement information acquisition unit 308 can accurately estimate the position and/or the movement of the relay station RN and/or the vehicle V, which are the target of communication control by the communication control apparatus 3, at the present or future time. Based on the activity history information, the expansion cell selection unit 310 can identify area where communication resources are insufficient despite high communication demand etc., and select a communication cell (e.g. the first non-terrestrial communication cell NTN1) that can provide an expansion cell (e.g. the first non-terrestrial expansion cell NTN1+) that can effectively cover such an identified area as the cell to be expanded by the relay station RN.

For example, if the communication traffic amount and/or the number of communication devices 2, relay stations RN, and/or vehicles V were significantly high in the past in specific area among a plurality of areas where the relay station RN and/or the vehicle V are likely to be located in the present or future time period when the movement information acquisition unit 308 estimates the movement information of the relay station RN and/or the vehicle V, it can be estimated that the relay station RN and/or the vehicle V are highly likely to be located in such specific area. Similarly, if the communication traffic amount and/or the number of communication devices 2, relay stations RN, and/or vehicles V were significantly high in the past in specific communication cell among a plurality of communication cells (e.g. the fourth terrestrial communication cell TN4 and the first non-terrestrial communication cell NTN1) that can provide expansion cells by the relay station RN in the present or future time period when the expansion cell selection unit 310 selects a cell to be expanded by the relay station RN, such specific communication cell can be selected as a cell to be expanded.

From the NWDAF, the LMF, and/or the servers of service providers as the activity history information collection unit 309, statistical information about the activities on the network (including statistical information about the connected base stations) not only of an unspecified number of the communication devices 2, the relay stations RN, and/or the vehicles V but also of the relay station RN and/or the vehicle V themselves for the estimation and/or the communication control and/or historical information about their physical locations can be obtained. Based on the activity history information of these relay station RN and/or vehicle V themselves during each time period, the movement information acquisition unit 308 can accurately estimate the position and/or the movement of the relay station RN and/or the vehicle V at the present or future time, and the expansion cell selection unit 310 can select an appropriate cell to be expanded by referring to the history of communication cells expanded by the relay station RN in the past.

For example, if the relay station RN and/or the vehicle V were frequently located in a specific area in the present or future time period when the movement information acquisition unit 308 estimates the movement information of the relay station RN and/or the vehicle V, it can be estimated that the relay station RN and/or the vehicle V are highly likely to be located in such specific area. Similarly, if the relay station RN frequently expanded a specific communication cell in the present or future time period when the expansion cell selection unit 310 selects a cell to be expanded by the relay station RN, such specific communication cell can be preferentially selected as a cell to be expanded.

In addition to or instead of the activity history information on past days as described above, the movement information acquisition unit 308 and/or the expansion cell selection unit 310 may use the activity history information of the relay station RN and/or the vehicle V themselves immediately before (e.g. within one hour) estimating the movement information of the relay station RN and/or the vehicle V and/or selecting a cell to be expanded. For example, if the relay station RN and/or the vehicle V were moving in a specific area in a specific direction within 30 minutes before the movement information acquisition unit 308 estimates the movement information of the relay station RN and/or the vehicle V, it can be presumed that the relay station RN and/or the vehicle V are highly likely to be located in the specific area or the proximity area where they can move in 30 minutes toward the specific direction from the specific area. Similarly, if the relay station RN expanded a specific communication cell within 30 minutes before the expansion cell selection unit 310 selects a cell to be expanded by relay station RN, the specific communication cell can be preferentially selected as the cell to be expanded, as long as the relay station RN remains in the area where it can expand the specific communication cell.

The expansion cell selection unit 310 selects a communication cell to be expanded by the relay station RN moving with the vehicle V based on the movement information acquired by the movement information acquisition unit 308, the activity history information collected by the activity history information collection unit 309, the various cell information (cell placement information, cell communication quality information, and cell expansion restriction information) acquired by the cell information acquisition unit 311. The cell information acquisition unit 311 comprises a cell placement information acquisition unit 312, a cell communication quality information acquisition unit 313, and a cell expansion restriction information acquisition unit 314.

The cell placement information acquisition unit 312 acquires cell placement information concerning the placement of one or more communication cells for selection by the expansion cell selection unit 310. The cell placement information acquisition unit 312 acquires, for example, the placement of the terrestrial communication cells TN1 through TN5 and the non-terrestrial communication cell NTN1 on the ground as shown in Figure 15, from each base station itself that provides each such communication cell and/or the core network CN which centrally manages the information on each such communication cell etc. This cell placement information not only enables recognition of the center position of each communication cell and the shape and the size of the coverage area (communication range), but also enables recognition of the presence or absence of communication cells in each area on the ground, the types of communication cells (terrestrial communication cell or non-terrestrial communication cell), the density of communication cells, the continuity and/or overlap of communication cells, the distance from the center position and/or the edge of a communication cell etc. The expansion cell selection unit 310 refers to this cell placement information together with other information (such as the movement information obtained by the movement information acquisition unit 308) to select a communication cell to be expanded by the relay station RN moving with the vehicle V.

In the upper area where the car or the vehicle V first passes in the example in Figure 15, the first terrestrial communication cell TN1 and the third terrestrial communication cell TN3 constitute a dense and continuous placement of communication cells. Then, when the relay station RN passes through this area together with the vehicle V, the expansion cell selection unit 310 selects the first terrestrial communication cell TN1 as the cell to be expanded by the relay station RN to provide the first terrestrial expansion cell TN1+ in the vicinity of the TN1, and selects the third terrestrial communication cell TN3 as the cell to be expanded by the relay station RN to provide the third terrestrial expansion cell TN3+ in the vicinity of the TN3.

After the relay station RN passes by the vicinity of the third terrestrial communication cell TN3, the density of the communication cells decreases and their continuity is lost. The candidate communication cells for the selection by the expansion cell selection unit 310 at this time are the fourth terrestrial communication cell TN4 and the first non-terrestrial communication cell NTN1. Typically, non-terrestrial communication cells are larger than terrestrial communication cells, therefore the area that can be expanded by the relay station RN is also larger. Thus, in such an area where the communication cells are not dense and not continuous, the expansion cell selection unit 310 preferentially selects the non-terrestrial communication cell (the first non-terrestrial communication cell NTN1) as the cell to be expanded that can provide a larger expansion cell (the first non-terrestrial expansion cell NTN1+), over the terrestrial communication cell (the fourth terrestrial communication cell TN4).

The cell communication quality information acquisition unit 313 acquires communication quality information (e.g. signal strength and communication delay) of one or more communication cells for selection by the expansion cell selection unit 310, from each base station itself that provides each communication cell, each communication device 2 in communication with each such base station (including communication device 2 that is measuring the communication quality of each such base station as a neighboring base station), and/or the core network CN which centrally manages the information on each such communication cell etc. The expansion cell selection unit 310 refers to this cell communication quality information together with other information (such as the movement information obtained by the movement information acquisition unit 308) to select a communication cell to be expanded by the relay station RN moving with the vehicle V.

For example, if there are multiple candidate communication cells for expansion (the fourth terrestrial communication cell TN4 and the first non-terrestrial communication cell NTN 1 in Figure 16) on or near the movement route RT of the relay station RN and/or vehicle V as shown in Figure 16, the expansion cell selection unit 310 selects the communication cell (e.g. the first non-terrestrial communication cell NTN1) with higher (or lower) communication quality indicated by the cell communication quality information obtained by the cell communication quality information acquisition unit 313. The expansion cell selection unit 310 may select the cell to be expanded based on the communication quality normalized by the communication demand, which is recognized based on the activity history information collected by the activity history information collection unit 309 etc. For example, the expansion cell selection unit 310 may preferentially select a communication cell where communication resources are insufficient despite high communication demand, i.e. a communication cell with low communication quality normalized by the communication demand, as the cell to be expanded.

The cell expansion restriction information acquisition unit 314 acquires cell expansion restriction information concerning the expansion restriction of one or more communication cells for selection by the expansion cell selection unit 310, from each base station itself that provides each communication cell and/or the core network CN which centrally manages the information on each such communication cell etc. When a relay station RN communicates with a base station to expand a communication cell, the communication resources of the base station will be used, therefore it would be likely that some base stations restrict the expansion of communication cells by a specific or unspecific relay station RN. Examples of the manner of restricting the expansion of communication cells include setting upper limits on the communication volume, the communication speed, the number of connected UEs etc. via the relay station RN, prohibiting the expansion of communication cells, and so on. These expansion restrictions may always be applied to the target communication cells, may be applied to the target communication cells depending on the time period or location, or may be applied to the target communication cells where there is no available communication resource while the communication volume, the communication speed, the number of connected UEs etc. of the target communication cells already exceed a certain level even without the relay station RN. When selecting an expansion cell from multiple candidate communication cells, the expansion cell selection unit 310 reduces the priority of the communication cell to which the expansion restriction is applied and preferentially selects the communication cell to which the expansion restriction is not applied.

The above are separate explanations of the various types of information that can be referenced when the expansion cell selection unit 310 selects a cell for expansion. In practice, the expansion cell selection unit 310 can holistically refer to and/or consider these pieces of information (the movement information acquired by the movement information acquisition unit 308, the activity history information collected by the activity history information collection unit 309, the cell placement information obtained by the cell placement information acquisition unit 312, the cell communication quality information obtained by the cell communication quality information acquisition unit 313, and/or the cell expansion restriction information obtained by the cell expansion restriction information acquisition unit 314), and select one or more cells to be expanded, which are recognized as optimal under certain decision criteria. For this purpose, the expansion cell selection unit 310 may be configured by artificial intelligence which has machine-learned comprehensive training data and/or learning data.

The connection control unit 35 connects the relay station RN to the base station that provides the communication cell selected by the expansion cell selection unit 310. In the example in Figure 16, the relay station RN is connected to the communication satellite 131 that provides the first non-terrestrial communication cell NTN1 selected by the expansion cell selection unit 310. The relay station RN connected to the communication satellite 131 provides the first non-terrestrial expansion cell NTN1+ that expands outside the first non-terrestrial communication cell NTN1.

In the fourth example, position information is estimated for an "indoor" communication device etc. as a position estimation target for which satellite positioning information is not available. In Figure 2, the position estimation target identification unit 3A identifies that a communication device as a position estimation target is located "indoors" or in other positions where satellite positioning information is not available, based on the fact that sufficient quality of satellite positioning information is not available from the communication device, non-satellite positioning information of higher quality than satellite positioning information is available etc. Non-satellite positioning information is positioning information that can be acquired by various indoor positioning technologies etc. that do not use positioning satellites. Indoor positioning technologies may utilize Wi-Fi (trademark), beacons such as Bluetooth (trademark), RFID etc. attached to a positioning target, ultrasonic, geomagnetism, UWB (Ultra Wide Band), sensors that measure physical quantities varying with position such as atmospheric pressure etc. Examples of communication devices as positioning targets or position estimation targets include smartphones etc. used by users indoors etc., IoT devices installed indoors etc., and drones flying indoors etc. for delivery etc.

The position estimation policy setting unit 3B sets a position estimation policy for the "indoor" communication device etc. identified by the position estimation target identification unit 3A. Then, the position estimation unit 3D estimates a position of the "indoor" communication device etc. utilizing non-satellite positioning information, in accordance with the position estimation policy set by the position estimation policy setting unit 3B. According to the present example, by utilizing non-satellite positioning information by various indoor positioning technologies etc. as the estimation basis information, high position estimation accuracy such as at the "cm level" can be achieved.

As specifically described in the first to the fourth examples above, according to the present embodiment, the position of the position estimation target can be flexibly estimated according to the position estimation policy set in accordance with the position estimation target.

The present disclosure has been described above based on embodiments. It is obvious to those skilled in the art that various variations are possible in the combination of each component and/or each process in the exemplary embodiments, and that such variations are also encompassed within the scope of the present disclosure.

It should be noted that the structures, the operations, and the functions of each apparatus and/or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.

1. A communication control apparatus comprising at least one processor that performs:
   by a position estimation target identification unit, identifying a position estimation target equipped with a communication function;
   by a position estimation policy setting unit, setting a position estimation policy for the identified position estimation target; and
   by a position estimation unit, estimating a position of the position estimation target in accordance with the set position estimation policy.
2. The communication control apparatus according to item 1, wherein the position estimation policy setting unit selects and sets the position estimation policy of the identified position estimation target from a plurality of position estimation policies.
3. The communication control apparatus according to item 1 or 2, wherein the position estimation policy specifies estimation basis information to be used in the estimation of position by the position estimation unit.
4. The communication control apparatus according to item 3, wherein the estimation basis information includes at least one of the following: a satellite positioning information of the position estimation target; a non-satellite positioning information of the position estimation target; information that can be acquired from a radio access network; information that can be acquired from a core network; information that can be acquired from the NWDAF (Network Data Analytics Function); information that can be acquired from the LMF (Location Management Function); and information that can be acquired from an activity data collection unit that collects activity data of a communication device.
5. The communication control apparatus according to any of items 1 to 4, wherein the position estimation policy specifies a calculation method in the estimation of position by the position estimation unit.
6. The communication control apparatus according to any of items 1 to 5, wherein the position estimation policy specifies estimation accuracy of the position by the position estimation unit.
7. The communication control apparatus according to any of items 1 to 6, wherein the position estimation policy specifies position estimation information to be output by the position estimation unit.
8. The communication control apparatus according to any of items 1 to 7, wherein
   the position estimation target identification unit identifies a communication device in a communication cell including jurisdictional areas of different emergency agencies as the position estimation target, and
   the position estimation unit estimates the jurisdictional area where the communication device is located in accordance with the position estimation policy set for the identified communication device.
9. The communication control apparatus according to item 8, wherein the at least one processor performs, by a connection control unit, connecting an emergency report from the communication device to the emergency agency of the estimated jurisdictional area.
10. The communication control apparatus according to any of items 1 to 9, wherein
   the position estimation target identification unit identifies a moving relay station that can communicate with a base station and expand the communication cell provided by the base station as the position estimation target, and
   the position estimation unit estimates a communication cell to be expanded by the moving relay station in accordance with the position estimation policy set for the identified relay station.
11. The communication control apparatus according to item 10, wherein the at least one processor performs, by a connection control unit, connecting the relay station to a base station providing the estimated communication cell.
12. The communication control apparatus according to any of items 1 to 11, wherein
   the position estimation target identification unit identifies a moving station that can communicate with a communication device as the position estimation target, and
   the position estimation unit estimates an emergency information distribution area where the moving station is located in accordance with the position estimation policy set for the identified moving station.
13. The communication control apparatus according to item 12, wherein the at least one processor performs, by an emergency information distribution control unit, having the moving station distribute emergency information for the estimated emergency information distribution area.
14. The communication control apparatus according to any of items 1 to 13, wherein
   the position estimation target identification unit identifies a communication device for which satellite positioning information is not available as the position estimation target, and
   the position estimation unit estimates the position of the communication device using non-satellite positioning information in accordance with the position estimation policy set for the identified communication device.
15. A communication control method comprising:
   identifying a position estimation target equipped with a communication function;
   setting a position estimation policy for the identified position estimation target; and
   estimating a position of the position estimation target in accordance with the set position estimation policy.
16. A computer-readable medium storing a communication control program causing a computer to perform:
   identifying a position estimation target equipped with a communication function;
   setting a position estimation policy for the identified position estimation target; and
   estimating a position of the position estimation target in accordance with the set position estimation policy.

The present disclosure relates to setting of position estimation policy in accordance with position estimation target equipped with communication function.

1 wireless communication system, 2 communication device, 3 communication control apparatus, 3A position estimation target identification unit, 3B position estimation policy setting unit, 3C position estimation policy storage unit, 3D position estimation unit, 4 activity data collection unit, 11 5G wireless communication system, 12 4G wireless communication system, 13 satellite communication system, 31 emergency report detection unit, 32 satellite communication information acquisition unit, 33 location information acquisition unit, 34 location estimation unit, 35 connection control unit, 41 NWDAF, 42 LMF, 43 data analysis server, 301 emergency information distribution area estimation unit, 302 emergency information distribution control unit, 303 area placement information acquisition unit, 304 communication-device functional unit, 305 base-station functional unit, 306 positioning unit, 307 communication quality comparison unit, 308 movement information acquisition unit, 309 activity history information collection unit, 310 expansion cell selection unit, 311 cell information acquisition unit, 312 cell placement information acquisition unit, 313 cell communication quality information acquisition unit, 314 cell expansion restriction information acquisition unit.

## Claims

1. A communication control apparatus comprising at least one processor that performs:
by a position estimation target identification unit, identifying a position estimation target equipped with a communication function;
by a position estimation policy setting unit, setting a position estimation policy for the identified position estimation target; and
by a position estimation unit, estimating a position of the position estimation target in accordance with the set position estimation policy.

2. The communication control apparatus according to claim 1, wherein the position estimation policy setting unit selects and sets the position estimation policy of the identified position estimation target from a plurality of position estimation policies.

3. The communication control apparatus according to claim 1, wherein the position estimation policy specifies estimation basis information to be used in the estimation of position by the position estimation unit.

4. The communication control apparatus according to claim 3, wherein the estimation basis information includes at least one of the following: a satellite positioning information of the position estimation target; a non-satellite positioning information of the position estimation target; information that can be acquired from a radio access network; information that can be acquired from a core network; information that can be acquired from the NWDAF (Network Data Analytics Function); information that can be acquired from the LMF (Location Management Function); and information that can be acquired from an activity data collection unit that collects activity data of a communication device.

5. The communication control apparatus according to claim 1, wherein the position estimation policy specifies a calculation method in the estimation of position by the position estimation unit.

6. The communication control apparatus according to claim 1, wherein the position estimation policy specifies estimation accuracy of the position by the position estimation unit.

7. The communication control apparatus according to claim 1, wherein the position estimation policy specifies position estimation information to be output by the position estimation unit.

8. The communication control apparatus according to claim 1, wherein
the position estimation target identification unit identifies a communication device in a communication cell including jurisdictional areas of different emergency agencies as the position estimation target, and
the position estimation unit estimates the jurisdictional area where the communication device is located in accordance with the position estimation policy set for the identified communication device.

9. The communication control apparatus according to claim 8, wherein the at least one processor performs, by a connection control unit, connecting an emergency report from the communication device to the emergency agency of the estimated jurisdictional area.

10. The communication control apparatus according to claim 1, wherein
the position estimation target identification unit identifies a moving relay station that can communicate with a base station and expand the communication cell provided by the base station as the position estimation target, and
the position estimation unit estimates a communication cell to be expanded by the moving relay station in accordance with the position estimation policy set for the identified relay station.

11. The communication control apparatus according to claim 10, wherein the at least one processor performs, by a connection control unit, connecting the relay station to a base station providing the estimated communication cell.

12. The communication control apparatus according to claim 1, wherein
the position estimation target identification unit identifies a moving station that can communicate with a communication device as the position estimation target, and
the position estimation unit estimates an emergency information distribution area where the moving station is located in accordance with the position estimation policy set for the identified moving station.

13. The communication control apparatus according to claim 12, wherein the at least one processor performs, by an emergency information distribution control unit, having the moving station distribute emergency information for the estimated emergency information distribution area.

14. The communication control apparatus according to claim 1, wherein
the position estimation target identification unit identifies a communication device for which satellite positioning information is not available as the position estimation target, and
the position estimation unit estimates the position of the communication device using non-satellite positioning information in accordance with the position estimation policy set for the identified communication device.

15. A communication control method comprising:
identifying a position estimation target equipped with a communication function;
setting a position estimation policy for the identified position estimation target; and
estimating a position of the position estimation target in accordance with the set position estimation policy.

16. A computer-readable medium storing a communication control program causing a computer to perform:
identifying a position estimation target equipped with a communication function;
setting a position estimation policy for the identified position estimation target; and
estimating a position of the position estimation target in accordance with the set position estimation policy.
